# EUROPEAN PATENT SPECIFICATION

(11) **EP 0 612 816 B1**
(45) Date of publication and mention of the grant of the patent: **17.11.1999**
(21) Application number: 94810085.4
(22) Date of filing: 15.02.1994
(51) Int. Cl.: C09B 67/00, C08K 5/3435, C09B 67/20, C08K 5/42, C08K 5/3445, C08K 5/3492

(54) **Stabilisation of pyrrolopyrrole pigments**
Stabilisierung von Pyrrolopyrrolpigmenten
Stabilisation de pigments de type pyrrolopyrrole

(30) Priority: 23.02.1993 EP 93810123
(43) Date of publication of application: 31.08.1994
(73) Proprietor: Ciba Specialty Chemicals Holding Inc., 4057 Basel (CH)
(72) Inventor: Chassot, Laurent, Dr., CH-1724 Praroman (CH)

(56) References cited:
- EP-A- 0 195 898
- EP-A- 0 241 419
- EP-A- 0 284 800
- EP-A- 0 389 428
- GB-A- 2 236 536
- US-A- 5 176 751

## Description

The present invention relates to the stabilisation of pyrrolopyrrole pigments against the effects of light and weathering by addition of an N-hydrocarbyloxy amine.

Pyrrolo[3,4-c]pyrrole pigments have been known for some years and are described, for example, in US-A 4 415 685 and US- A 4 579 949. Some of these have proven successful as high-quality pigments. Although they already have very good light stability and weathering resistance, it has now been found that these properties can, surprisingly, be further improved, in transparent as well as in opaque pigment forms, if the pigments are mixed with an N-hydrocarbyloxy amine.

N-hydrocarbyloxy amines, in particular N-hydrocarbyloxy derivatives of HALS (Hindered Amine Light Stabiliser), have been disclosed e.g. in US Patents 4 921 962, 5 019 613, 5 021 483, 5 021 486, 5 021 577 and in EP-A 389 428 as light stabilisers for polymers against the degradative effects of actinic stimuli. They were found particularly effective in stabilising organic materials such as polyolefins, elastomers, polyvinyl chloride, polyesters, polyurethanes, ambient cured and acid catalysed thermoset coatings or enamels. EP-A 309 401 discloses the use of N-hydroxy-HALS for preventing inadequacies such as embrittlement, cracking, corrosion, erosion, loss of gloss, chalking and yellowing of coatings containing some specific organic pigments such as phthalocyanine and azo pigments.

It has now been found that very surprisingly, the light stability and weathering resistance of pyrrolopyrrole pigments, which is already high, can be further improved by mixing or coating the pigment particles with an N-hydrocarbyloxy amine.

The present invention accordingly relates to light-stabilised pigment compositions comprising
a) at least one pyrrolo[3,4-c]pyrrole pigment of the formula 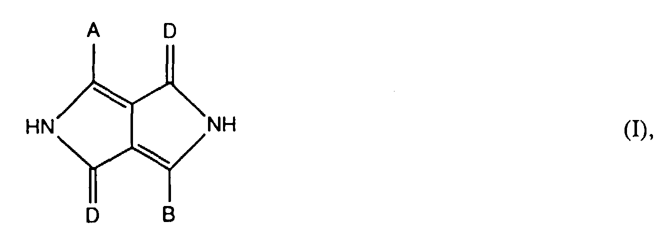 in which A and B, independently of one another, are isocyclic or heterocyclic aromatic radicals, and D is an oxygen or sulfur atom, and
b) from 1 to 100 % by weight, based on the pigment, of an N-hydrocarbyloxy amine.

Pyrrolo[3,4-c]pyrrole pigments are known. They are described in detail, for example, in US-A 4 415 685, columns 1, 2 and 3, and in particular in Examples 1, 6 and 27 to 49, and in US-A 4 579 949, in particular in Examples 1 to 46.

The N-hydrocarbyloxy amines are likewise known compounds. Any that are still novel can be prepared in analogy to well known methods.

Of particular interest are pigment compositions in which a pyrrolo[3,4-c]pyrrole pigment of the formula I is employed, in which A and B, independently of one another, are groups of the formula 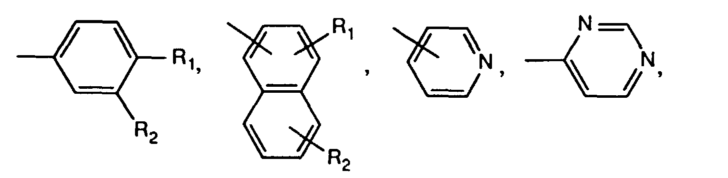 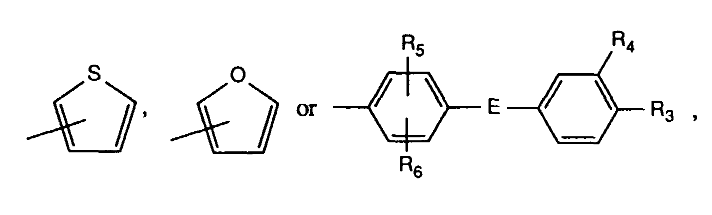 in which
R₁ and R₂, independently of one another, are hydrogen, halogen, C₁-C₆alkyl, C₁-C₁₈alkoxy, C₁-C₁₈alkylmercapto, C₁-C₁₈alkylamino, CN, NO₂, phenyl, trifluoromethyl, C₅-C₆cycloalkyl, imidazolyl, pyrrazolyl, triazolyl, piperazinyl, pyrrolyl, oxazolyl, benzoxazolyl, benzothiazolyl, benzimidazolyl, morpholinyl, piperidinyl or pyrrolidinyl,
E is -O-, -S-, -SO-, -SO₂- or -NR₇-,
R₃ and R₄, independently of one another, are hydrogen, halogen, C₁-C₆alkyl, C₁-C₁₈alkoxy or CN,
R₅ and R₆, independently of one another, are hydrogen, halogen or C₁-C₆alkyl, and
R₇ is hydrogen or C₁-C₆alkyl.

Any halogen substituents are, for example, iodine, fluorine, in particular bromine and preferably chlorine.

C₁-C₆Alkyl is, for example, methyl, ethyl, n-propyl, isopropyl, n-butyl, sec-butyl, tert-butyl, n-amyl, tert-amyl or hexyl.

C₁-C₁₈Alkoxy is, for example, methoxy, ethoxy, n-propoxy, isopropoxy, butoxy, hexyloxy, decyloxy, dodecyloxy, hexadecyloxy or octadecyloxy.

C₁-C₁₈Alkylmercapto is, for example, methylmercapto, ethylmercapto, propylmercapto, butylmercapto, octylmercapto, decylmercapto, hexadecylmercapto or octadecylmercapto.

C₁-C₁₈Alkylamino is, for example, methylamino, ethylamino, propylamino, hexylamino, decylamino, hexadecylamino or octadecylamino.

C₅-C₆Cycloalkyl is cyclopentyl or, in particular, cyclohexyl.

Particular preference is given to pyrrolo[3,4-c]pyrrole pigments of the formula I in which A and B, independently of one another, are groups of the formula 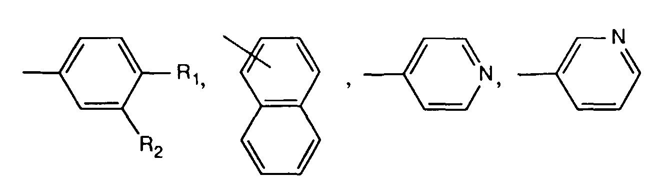 or 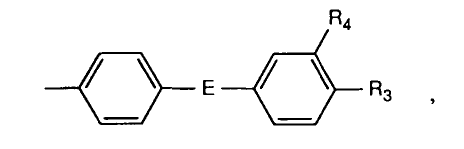 in which
R₁ and R₂, independently of one another, are hydrogen, chlorine, bromine, C₁-C₄alkyl, C₁-C₆alkoxy, C₁-C₆alkylamino, CN or phenyl,
E is -O-, -NR₇- or -SO₂-,
R₃ and R₄ are hydrogen,
R₇ is hydrogen, methyl or ethyl, and
D is an oxygen atom,

in particular those of the formula 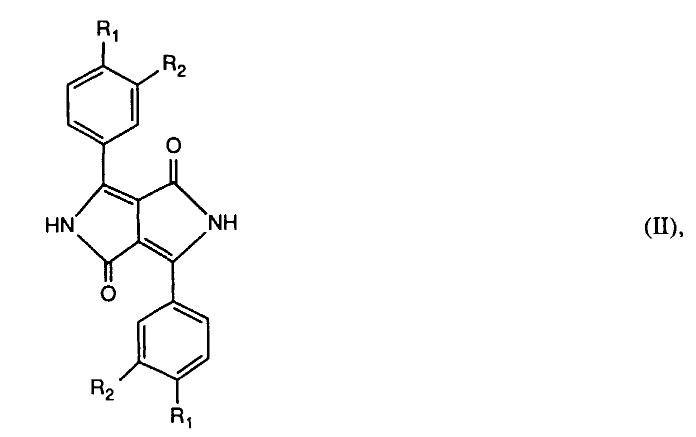 in which R₁ and R₂, independently of one another, are hydrogen, methyl, tert-butyl, chlorine, bromine, CN or phenyl.

The N-hydrocarbyloxy amine is preferably employed in an amount of 5-100 % by weight, based on the pigment.

In principle, any known N-hydrocarbyloxy amine, but if desired also novel N-hydrocarbyloxy amine which can be prepared analogously to methods known in general terms, can be used for stabilisation. However, it is expedient to use a compound of the formula 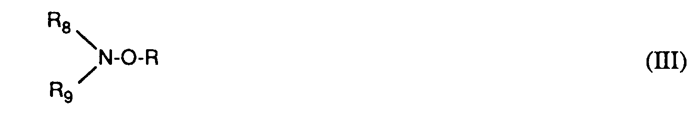 or a compound containing at least a group of the formula 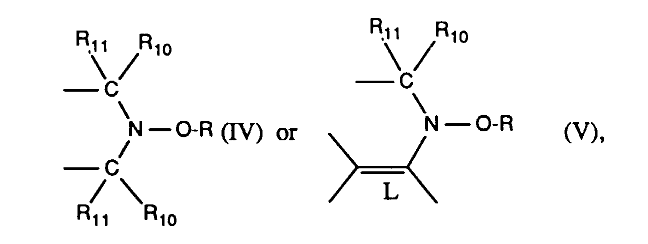 in which R is C₁-C₁₈alkyl, C₂-C₁₂alkenyl, C₂-C₁₂alkynyl, C₅-C₁₂cycloalkyl, C₆-C₁₀aryl or C₇-C₁₂aralkyl and R₈ and R₉, independently of one another, are phenyl or naphthyl, which is unsubstituted or monosubstituted or disubstituted by C₁-C₁₈alkyl, C₁-C₁₈alkoxy or C₂-C₁₂alkenyl, or R₈ and R₉ together form a 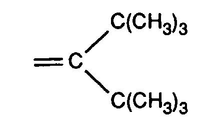 group,
R₁₀ and R₁₁, independently of one another, are methyl, ethyl or phenyl, or together form a 4-12-membered aliphatic ring, or R₁₀ is hydrogen and the two R₁₁ radicals together are a divalent radical which, together with the 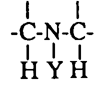 group, form a 4-, 5- or 6-membered ring, and
L is an aromatic radical.
R₁₀ and R₁₁ are preferably methyl.

Of particular interest are pigment compositions in which an N-hydrocarbyloxy amine of the formula 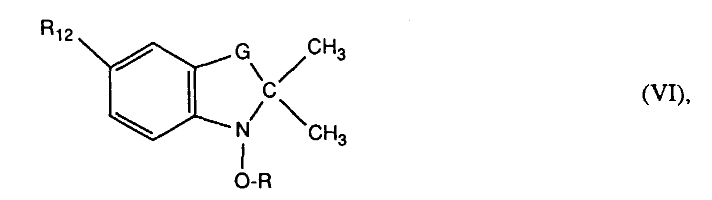 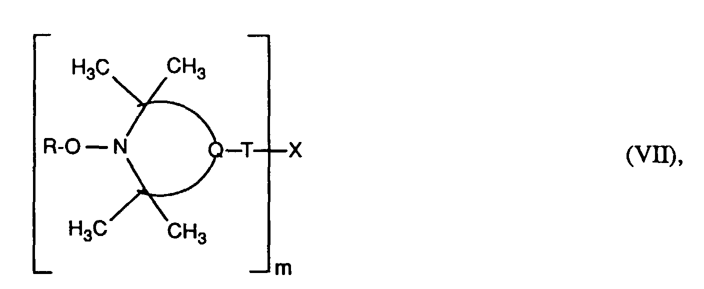 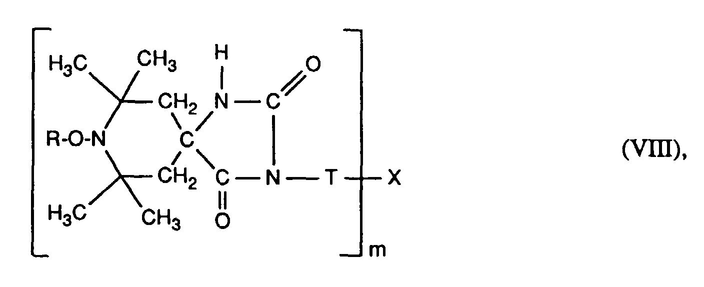 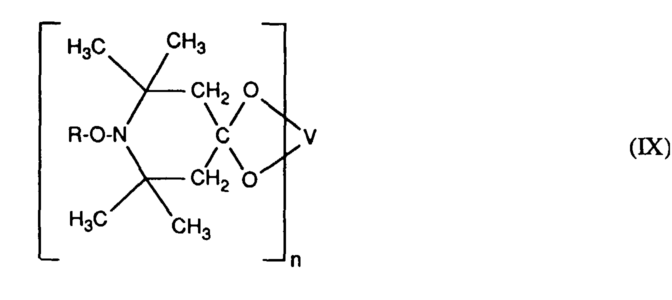 or 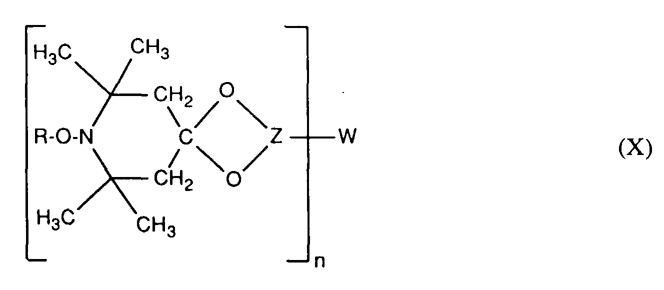 is used in which
- R: is tert.-butyl, C₇-C₁₈-alkyl or C₅-C₆-cycloalkyl,
- R₁₂: is C₁-C₁₈alkyl or C₁-C₁₈alkoxy,
- G: is a divalent group of the formula -CR₁₃-CH₂- or -CHR₁₃-CH₂- and
- R₁₃: is C₁-C₁₈alkyl,
- Q: is a group of the formula 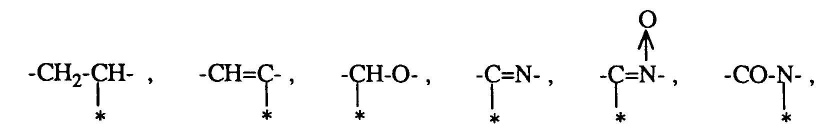 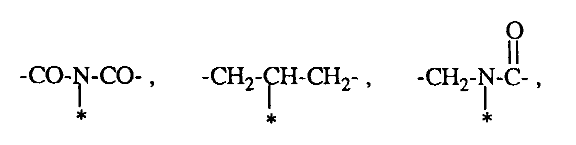 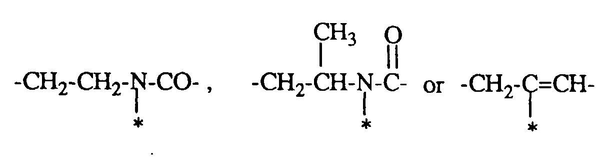 in which the bond denoted by * is the bond leading to T,
- T: is a direct bond or a group of the formula 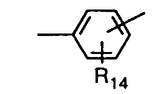 in which R₁₄ is hydrogen, halogen or C₁-C₄alkyl, or is -(CH₂)ᵣ-, in which r is 1 or 2,
- m: is the number 1, 2, 3, 4 or 6,
- X,: if m = 1, is hydrogen, C₁-C₁₈alkyl, phenyl which is unsubstituted or substituted by C₁-C₄alkyl, C₁-C₄alkoxy, phenyl or halogen, or, under the condition that T, if bonded to a nitrogen atom, is not a direct bond, is a group of the formula -OCO-NR₁₅R₁₆, -OSO₂-NR₁₅R₁₆, -OCO-R₁₆, -COOR₁₆, -CONR₁₅R₁₆, -NR₁₅-COR₁₆, -NR₁₅-CONR₁₅R₁₆, -OR₁₆, -NR₁₅R₁₆, 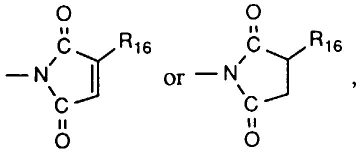 in which R₁₅ is hydrogen or C₁-C₁₈alkyl, R₁₆ is C₁-C₁₈alkyl, C₂-C₁₂alkenyl, C₅-C₁₂cycloalkyl, phenyl or naphthyl which is unsubstituted or substituted by C₁-C₄alkyl, C₁-C₄alkoxy, halogen, phenyl or nitro, or a -(CH₂)ₛ-CHR₁₇R₁₈ group where s is zero, 1, 2 or 3, R₁₇ is hydrogen, methyl or phenyl, and R₁₈ is -OH, halogen, -COOCH₃ or -COOC₂H₅,
if m = 2, is a group of the formula
-(CH₂ 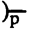 or, under the condition that T, if bonded to a nitrogen atom, is not a direct bond, a group of the formula -O-(CH₂)ₚ-O-, -NR₁₅-(CH₂)ₚ-NR₁₅-, -OCO-F-COO-, -NR₁₅-CO-F-CO-NR₁₅-, -OCO-NH-F-NH-COO- or -NR₁₅-CONH-F-NHCO-NR₁₅-, in which F is -(CH₂)ₚ-, 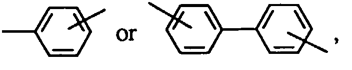 and p is a number between 2 and 10,
if m = 3, is a 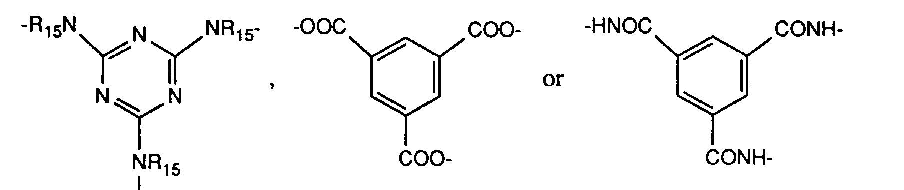 group, and
if m = 4, is a 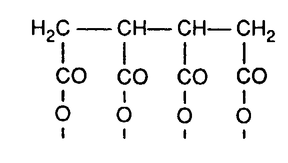 group, and
if m = 6, is a 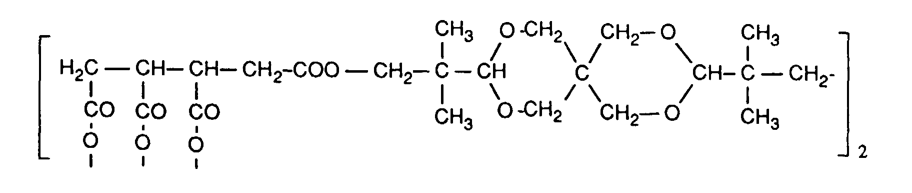 group,
- n: is the number 1 or 2,
- V,: if n = 1, is C₂-C₈alkylene, hydroxyalkylene or C₄-C₂₂acyloxyalkylene, and, if n = 2, is the (-CH₂)₂C(CH₂-)₂ or 〉C〈 group, and
- Z: is a group of the formula 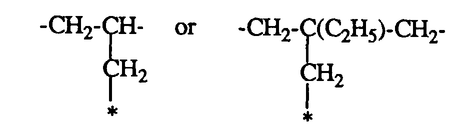 in which the bond denoted by * is the bond leading to W, and
- W,: if n = 1, is a -OCOR₁₉ group, in which R₁₉ is C₁-C₁₈alkyl, or phenyl or naphthyl which is unsubstituted or substituted by C₁-C₄alkyl, C₁-C₄alkoxy or halogen, and if n = 2, is a group of the formula -OCO-(CH₂)ₚ-COO- or

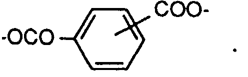

Any C₁-C₄alkyl substituents are, for example, methyl, ethyl, n-propyl, isopropyl, n-butyl, sec-butyl or tert-butyl, and C₁-C₁₈alkyl is additionally, for example, n-amyl, tert-amyl, hexyl, heptyl, octyl, 2-ethylhexyl, decyl, dodecyl, tetradecyl, hexadecyl or octadecyl.

C₁-C₄-Alkoxy is, for example, methoxy, ethoxy, n-propoxy, isopropoxy or butoxy, and C₁-C₁₈alkoxy is additionally, for example, hexyloxy, decyloxy, dodecyloxy, hexadecyloxy or octadecyloxy.

Halogen is, for example, iodine, fluorine, in particular bromine and preferably chlorine.

Any C₂-C₁₂alkenyl substituents are, for example, vinyl, allyl, methallyl, 2-butenyl, 2-hexenyl, 3-hexenyl, 2-octenyl or 2-dodecenyl. Alkynyl is preferably propargyl.

C₆-C₁₀aryl R is, for example, phenyl, naphthyl or tolyl and C₇-C₁₂aralkyl R is, for example, benzyl, α-methylbenzyl or α,α-dimethylbenzyl.

C₅-C₁₂cycloalkyl R and R₁₆ are, for example, cyclopentyl, cycloheptyl, cyclooctyl, cyclononyl, cyclododecyl or preferably cyclohexyl.

C₂-C₈alkylene or -hydroxyalkylene V is, for example, ethylene, 1-methylethylene, propylene, 2-ethylpropylene or 2-ethyl-2-hydroxymethylpropylene, and C₄-C₂₂acyloxyalkylene V is, for example, 2-ethyl-2-acetoxymethylpropylene.

Of particular interest are pigment compositions in which an N-hydrocarbyloxy amine of the formula VII, VIII or IX as defined above is used.

Particular preference is given to N-hydrocarbyloxy amines of the formula 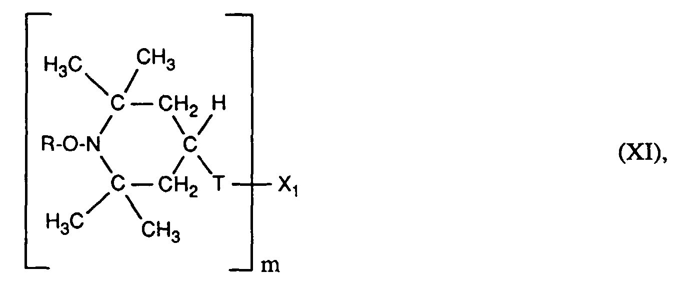 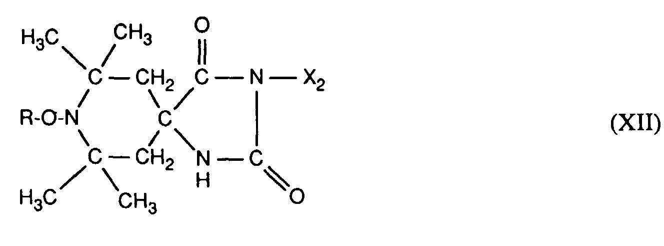 or 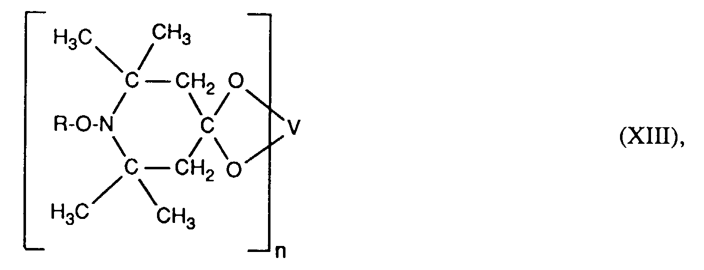 in which
- R: is as defined in the preferred meaning mentioned above,
- T: is a direct bond,
- m: is 1, 2 or 3,
- X₁,: if m = 1, is C₁-C₁₈alkyl, -OCO-R₁₆, -NR₁₅-COR₁₆ or 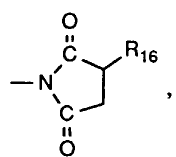 in which R₁₅ is hydrogen or or C₁-C₁₈alkyl, and R₁₆ is C₁-C₁₈alkyl, or phenyl or naphtyl which is unsubstituted or substituted by C₁-C₄alkyl, C₁-C₄alkoxy, phenyl or halogen, if m = 2, is a -OCO-(CH₂)ₚ-OCO- or -NR₁₅CO-(CH₂)ₚ-CONR₁₅- group in which p is a number between 2 and 8, 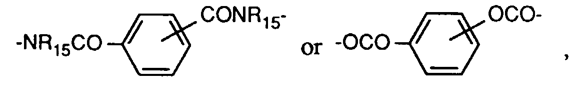 and
if m = 3, is a 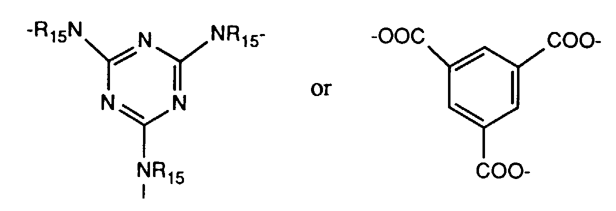 group,
- X₂: is C₁-C₁₈alkyl,
- n: is the number 2, and
- V: is the (-CH₂)₂C(CH₂-)₂ or 〉C〈 group.

Preference is given to N-hydrocarbyloxy amines of the formula XI or XII in which R is tert.-butyl, n-heptyl, n-octyl or cyclohexyl, T is a direct bond, X₁, if m is 1, is benzoyloxy or naphthyloxy, if m is 2, is a group -OCO-(CH₂)ₚ-OCO- in which p is a number between 2 and 8, and X₂ is C₈-C₁₈alkyl.

As mentioned above, the pyrrolo[3,4-c]pyrrole pigments are stabilised by the admixture of an N-hydrocarbyloxy amine against the action of light and weathering, which can result in fading, but also darkening of the colourings. The novel admixing of the N-hydrocarbyloxy amine with the pigment has proven to be effective, i.e. stabilising, in both cases.
Accordingly, the invention furthermore relates to a process for the light and weathering stabilisation of pyrrolo[3,4-c]pyrrole pigments of the formula 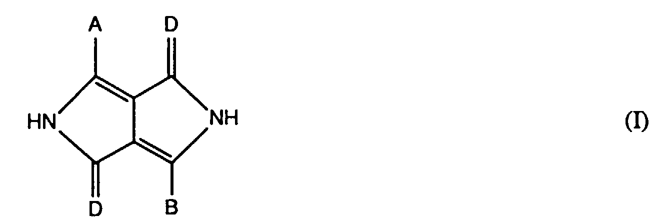 in which A and B, independently of one another, are isocyclic or heterocyclic aromatic radicals, and D is an oxygen or sulfur atom, comprising mixing or coating the pigment particles with from 1 to 100 % by weight, based on the pigment, of an N-hydrocarbyloxy amine as defined above.

This can be carried out by the various methods below:
- The N-hydrocarbyloxy amine in the desired amount is dissolved in an organic solvent. The pigment is suspended in this solution by conventional methods, and the resultant suspension is dispersed, if necessary, in a conventional mill. The pigment mixture is isolated by removing the solvent by distillation and is subsequently dried;
- The necessary amount of N-hydrocarbyloxy amine is, dissolved in an organic solvent, added to a pigment suspension prepared by conventional methods and then, by addition of a solvent in which it is insoluble, for example water, is precipitated and co-suspended. The suspension is then filtered, and the pigment mixture is isolated by conventional methods;
- In a preferred method, however, the pigment and the N-hydrocarbyloxy amine are either premixed or incorporated separately by conventional methods in the desired amount into the substrate to be pigmented.

The pigment compositions according to the invention are highly suitable as pigments for colouring high-molecular-weight organic material, in particular give high light stability and weathering resistance are required.

Examples of high-molecular-weight organic materials which can be pigmented by means of the pigment compositions according to the invention are cellulose ethers and cellulose esters, such as ethylcellulose, nitrocellulose, cellulose acetate and cellulose butyrate, natural or synthetic resins, such as polymerisation resins or condensation resins, such as amino resins, in particular urea- and melamine-formaldehyde resins, alkyd resins, phenolic resins, polycarbonates, polyolefins, polystyrene, polyvinyl chloride, polyamides, polyurethanes, polyesters, ABS, polyphenylene oxides, rubber, casein, silicone and silicone resins, individually or in mixtures.

The pigment compositions according to the invention are particularly suitable for colouring polyvinyl chloride and polyolefins, such as polyethylene and polypropylene, and for pigmenting paints, coating materials and printing inks. However, their high light stability means that they are also highly suitable for use in electrophotographic materials (for example photocells), coloured filters (for example liquid-crystal displays), information-storage materials (optical disks), nonlinear optics and in optical limiters.

However, the pigment compositions according to the invention are preferably suitable for colouring water-borne and/or solvent-containing paints, in particular automotive paints.

The high-molecular-weight organic compounds mentioned may, individually or in mixtures, be in the form of plastic compositions, melts, spinning solutions, paints, coating materials or printing inks. Depending on the application, it has proven advantageous to employ the pigment compositions according to the invention as toners or in the form of formulations.

Based on the high-molecular weight organic material to be pigmented, the pigment compositions according to the invention can be employed in an amount of from 0.01 to 40 % by weight, preferably from 0.1 to 20 % by weight.

The pigmenting of the high-molecular-weight organic substances by means of the pigment compositions according to the invention is carried out, for example, by mixing a pigment composition of this type, if desired in the form of a masterbatch, or the individual components, with these substances using roll mills, mixers or grinders. The pigmented material is then converted into the final shape desired by processes known per se, such as calandering, compression moulding, extrusion, coating, casting or injection moulding. It is frequently desirable, for the production of non-rigid mouldings or to reduce their brittleness, to incorporate plasticisers into the high-molecular-weight compounds before shaping. These may be, for example, esters of phosphoric acid, phthalic acid or sebacic acid. The plasticisers can be incorporated into the polymers before or after incorporation of the pigment compositions according to the invention. In order to obtain different shades, it is furthermore possible to incorporate fillers or other chromophoric components such as white, coloured or black pigments, in any desired amounts in addition to the pigment compositions according to the invention.

For pigmenting paints, coating materials and printing inks, the high-molecular-weight organic materials and the pigment compositions according to the invention, if desired together with additives, such as fillers, other pigments, driers or plasticisers, are finely dispersed or dissolved in a joint organic solvent or solvent mixture. This can be done by dispersing or dissolving the individual components separately or more than one together and only then combining all the components.

In colourings, for example of paints, polyvinyl chloride or polyolefins, the pigment compositions according to the invention are distinguished by good general pigment properties, such as good dispersibility, high tinting strength and purity, and good migration, heat and in particular light and weathering resistance.

The examples below illustrate the invention. Parts are by weight, unless stated otherwise.

Examples 1-14: 0.5 g of a red pigment of the formula 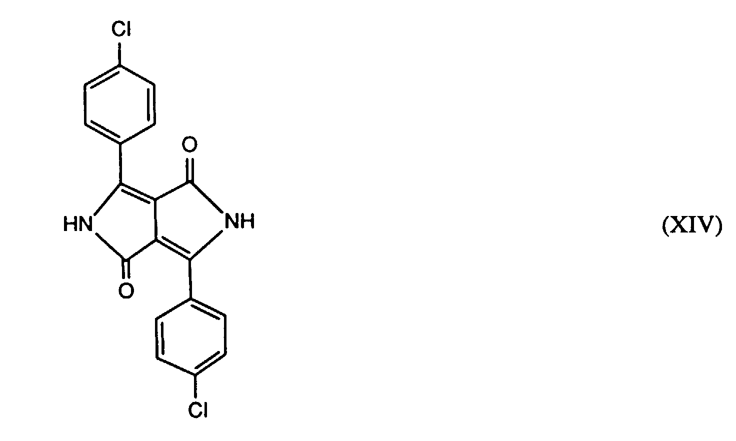 and 0.05 g of an N-hydrocarbyloxy amine of the formula 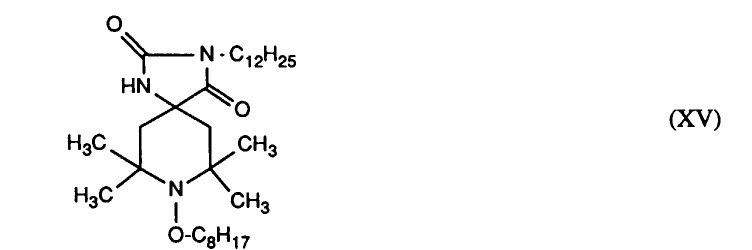 9.5 g of TiO₂, 3 g of xylene and 30 g of stoving lacquer comprising 56 parts of alkyd resin ®ALFTALAT AC 451M (Hoechst AG, 60 % in xylene/Solvesso 150*), 23 parts of melamine resin ®MAPRENAL MF 600 (Hoechst AG, 65 % in n-butanol/isobutanol), 20 parts of xylene and 1.0 part of silicone oil (1 % in xylene) are mixed by conventional methods. The coloured paint is applied to aluminium sheeting and stoved for 30 minutes at 130°C.
* ®SOLVESSO 150, aromatic solvent from ESSO

Further paint colourings are produced in precisely the same way, with the only exception that the N-hydrocarbyloxy amine of the formula XV is replaced by the same amount by weight of the N-hydrocarbyloxy amine indicated in Table 1 below.

A control paint colouring is produced, again in the same way, with the exception that the pigment is employed without addition of N-hydrocarbyloxy amine.

The weathering resistance of the resultant paint colourings is determined by the WOM test in accordance with DIN 53387 after weathering for 500 hours. In all the examples shown, better weathering resistance than in the control paint colouring can be demonstrated.

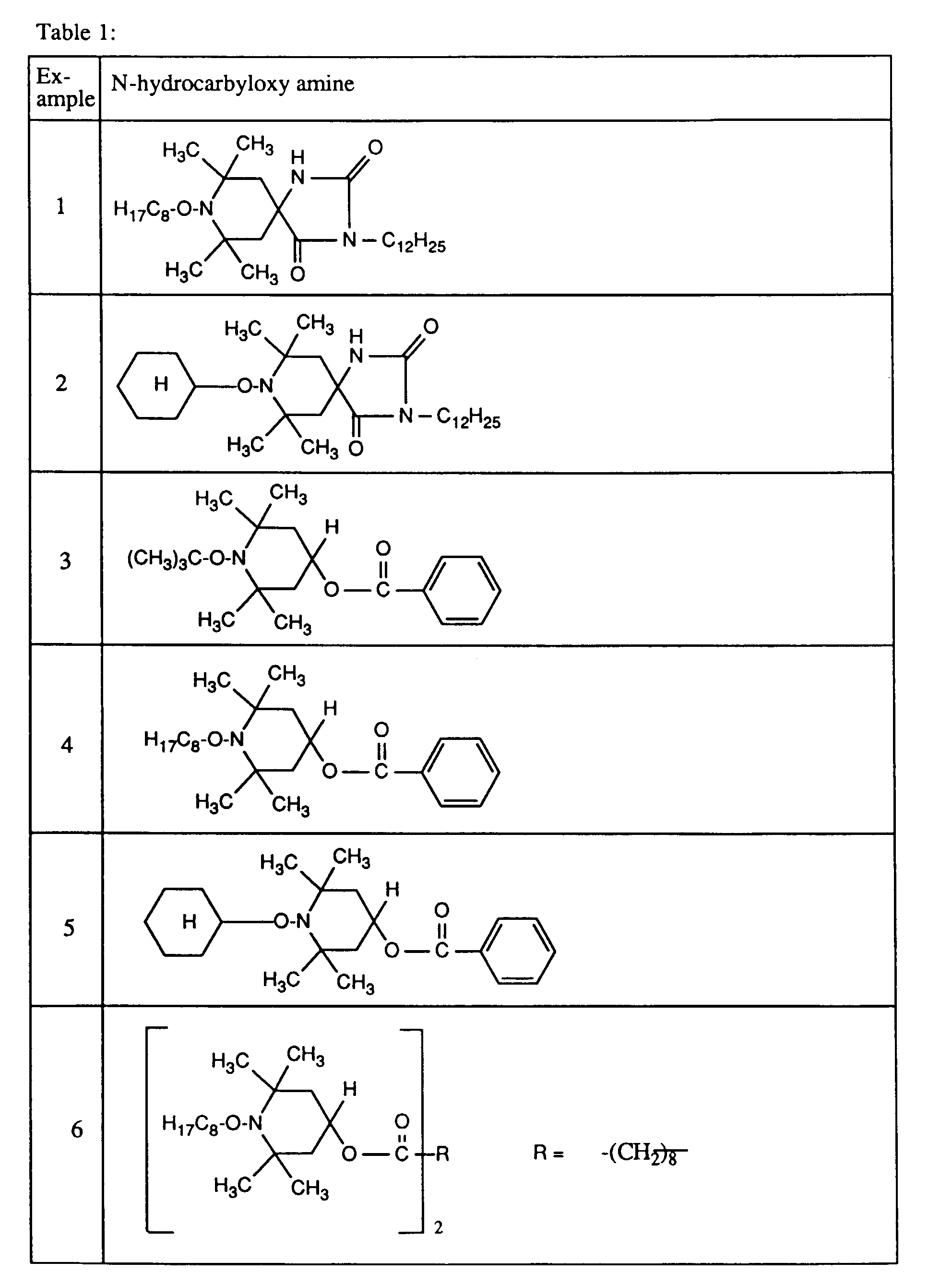

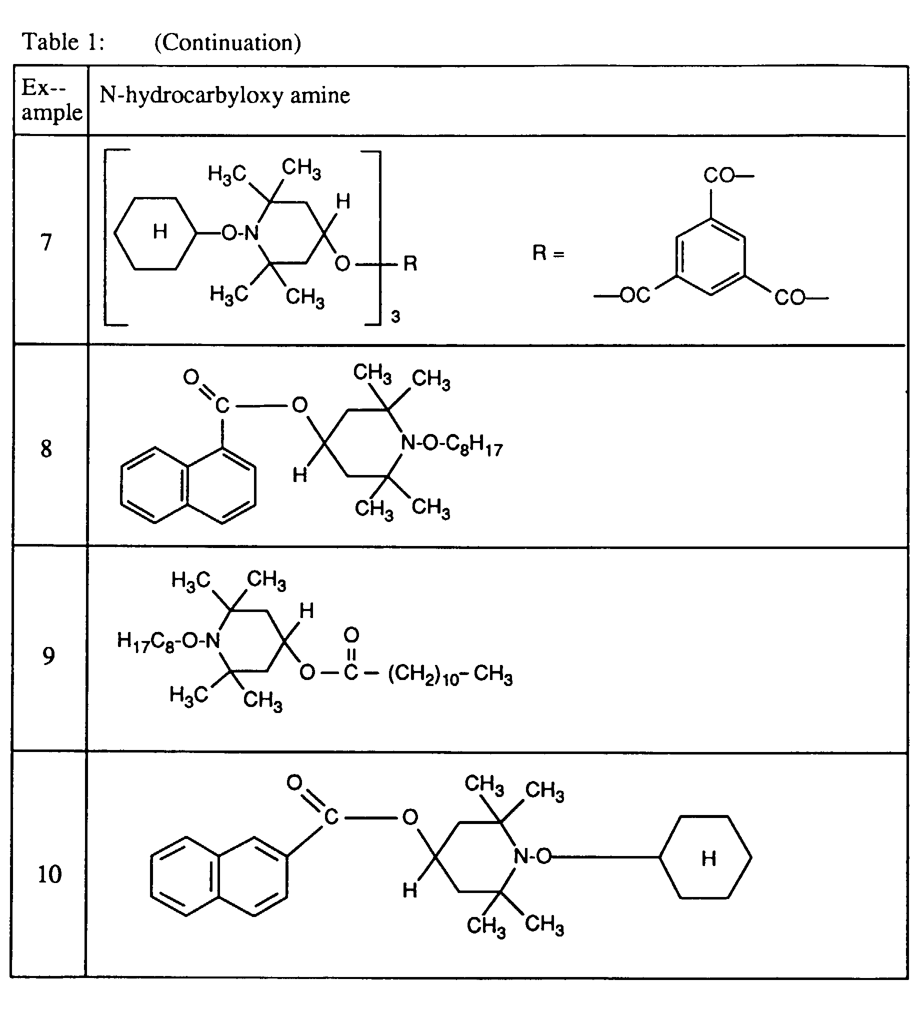

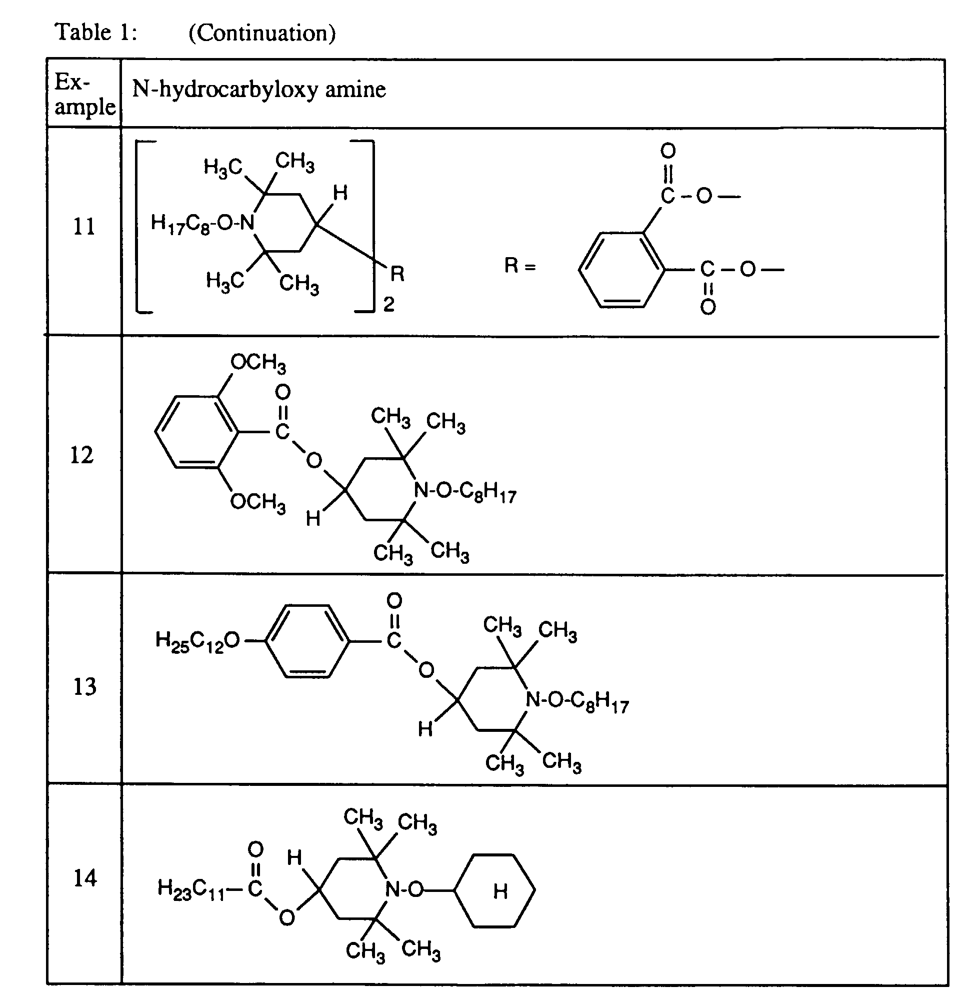

Examples 15-16: 0.4 g of the pigment of the formula XIV and 0.04 g of the N-hydrocarbyloxy amines shown in Table 2 are incorporated separately, but otherwise in the same way, into the same alkyd-melamine stoving lacquer (white reduction) as in Example 1 (method B). The weathering resistance of the paint colourings obtained is determined as described in Example 1. In all the examples shown, better weathering resistance than in the control coloured coating can be demonstrated using the same pigment.

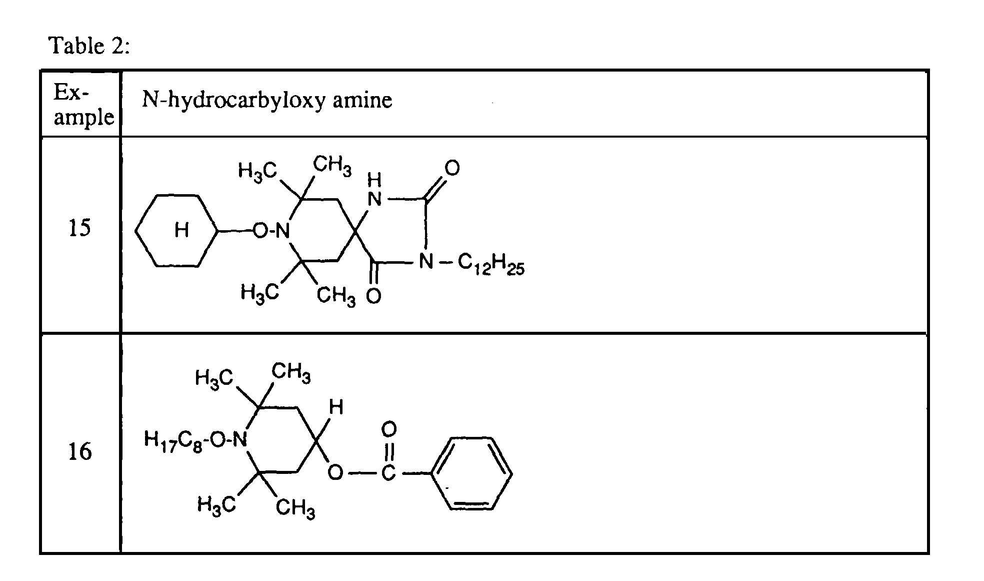

Examples 17 and 18: 0.2 g of the N-hydrocarbyloxy amine of the formula XV are added to a suspension of 2 g of the pigment of the formula XIV in methanol (the former dissolves in the methanol during the addition). The suspension is stirred for 2 hours, 100 ml of water are added, and the suspension is stirred at room temperature over night. A further 200 ml of water are then added, and the suspension is filtered. The residue is dried at 100°C (method C).

The process is repeated, with the single exception that the N-hydrocarbyloxy amine of the formula XV is replaced by the same amount by weight of the N-hydrocarbyloxy amine described in Example 6 dissolved in 7 ml of chloroform.

The two products are each incorporated in the same way into the same alkyd-melamine stoving lacquer (white reduction) as in Example 1. The weathering resistance of the coloured coatings obtained is determined as described in Example 1. In both examples, better weathering resistance than in the corresponding control coloured coating can be demonstrated.

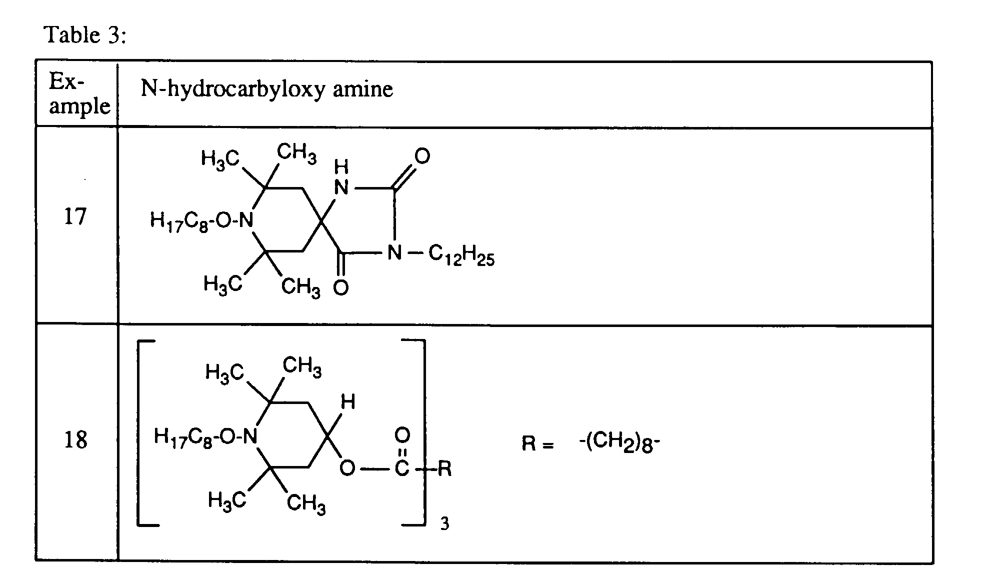

Example 19: Example 1 is repeated, with the exception that the pigment of the formula XIV is replaced by the same amount by weight of a pigment of the formula 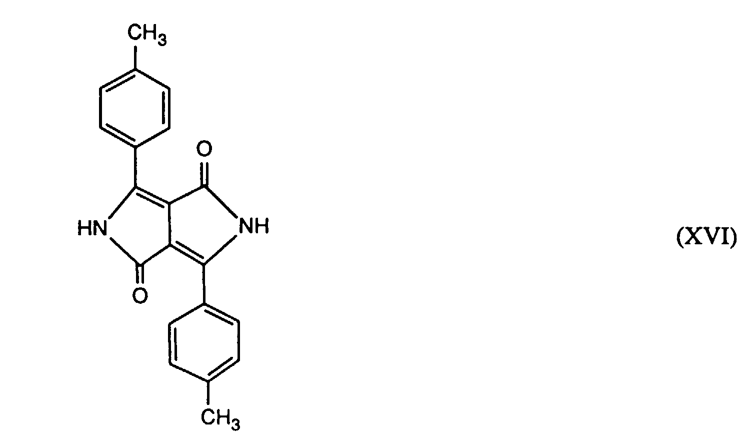 and the N-hydrocarbyloxy amine of the formula XV is replaced by the same amount by weight of the N-hydrocarbyloxy amine described in Example 4. Better weathering resistance than in the corresponding control coloured coating is obtained.

Examples 20-22: Example 1 is repeated, with the exception that the pigment of the formula XIV is replaced by the same amount by weight of the pigment of the formula 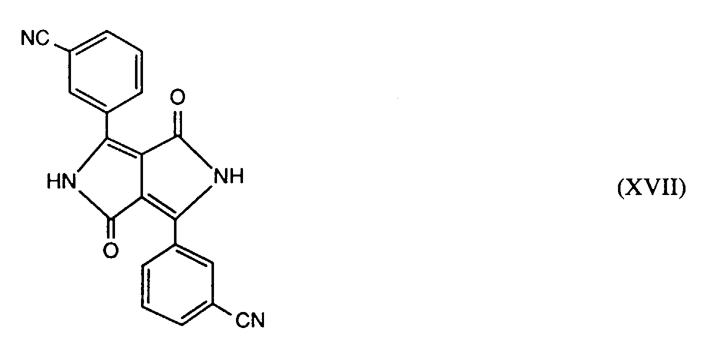 and the N-hydrocarbyloxy amine by the same amount of the N-hydrocarbyloxy amines shown in Table 4 below. In all the examples, better weathering resistance is observed than for the corresponding control coloured coating.

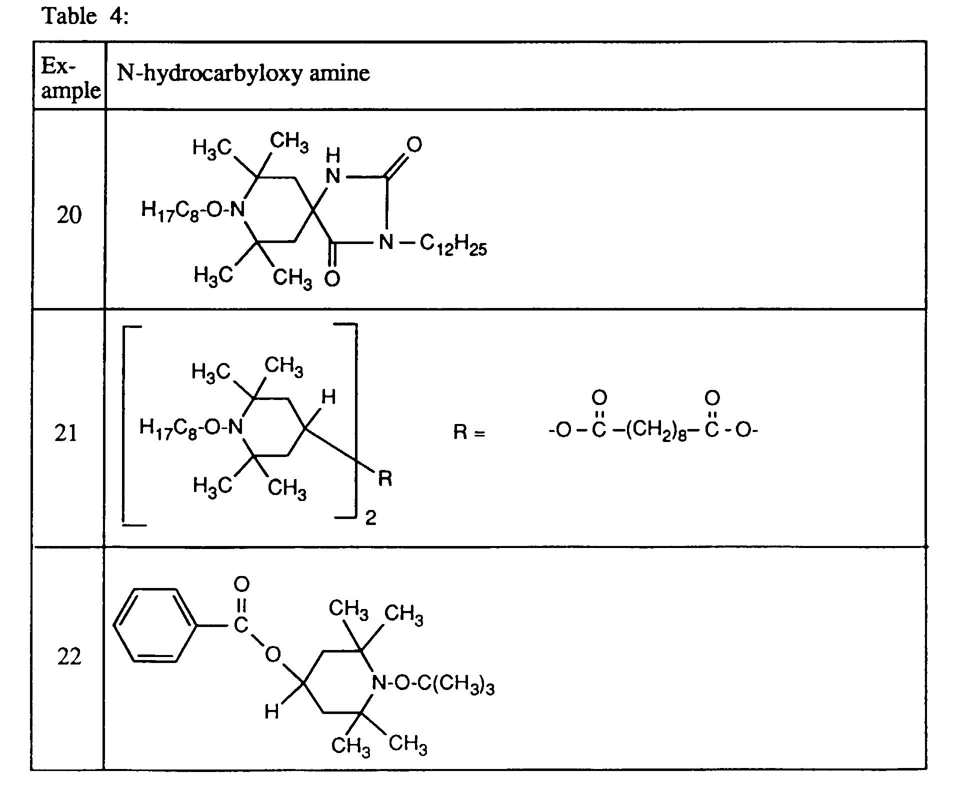

Examples 23-37: Example 1 is repeated, with the single exception that the N-hydrocarbyloxy amine of the formula XV is in each case employed in the amount by weight shown in Table 5 below, in % based on the pigment.

**Table 5:**

| Example | % of N-hydrocarbyloxy amine |
|---|---|
| 23 | 1 |
| 24 | 2 |
| 25 | 5 |
| 26 | 10 |
| 27 | 15 |
| 28 | 20 |
| 29 | 25 |
| 30 | 30 |
| 31 | 40 |
| 32 | 50 |
| 33 | 60 |
| 34 | 70 |
| 35 | 80 |
| 36 | 90 |
| 37 | 100 |

### Examples 38-41:

| Solution A | |
|---|---|
| Formulation: | |
| 67.1 parts of A1: | 8.2 % solution of 86 parts of cellulose acetobutyrate (25 % in butyl acetate), 4 parts of zirconium octanoate, 48 parts of SOLVESSO 150® (aromatic solvent from ESSO), 70 parts butyl acetate and 52 parts of xylene; |
| 24.8 parts of A2: | polyester resin DYNAPOL H 700® (60 %, from Dynamit Nobel); |
| 3.1 parts of A3: | melamine resin MAPRENAL MF 650® (55 %, from Hoechst AG). |

| Dispersion B | |
|---|---|
| Formulation: | |
| 12.3 parts | of aluminium paste Silverline 3334® (Silverline); |
| 8.0 parts | of SOLVESSO 150®; |
| 59.34 parts | of A1; |
| 21.92 parts | of A2; |
| 2.74 parts | of A3. |

A 1:1 mixture of a) a dispersion, obtained by conventional methods, of 5 parts of the pigment of the formula XIV and 5 parts of one of the N-hydrocarbyloxy amine shown in Table 6 in solution A and b) the dispersion B is applied by means of a spray gun. After brief drying, a clear coat based on a thermocurable acrylic varnish is applied and stoved at 130°C for 30 minutes. A red metal-effect finish is obtained.

A control coloured coating is produced in the same way, with the exception that the pigment is employed without addition of N-hydrocarbyloxy amine.

The weathering resistance of the resultant coloured coatings is determined by the WOM test after weathering for 2000 hours.

All the examples show better weathering resistance than that of the control coloured coating.

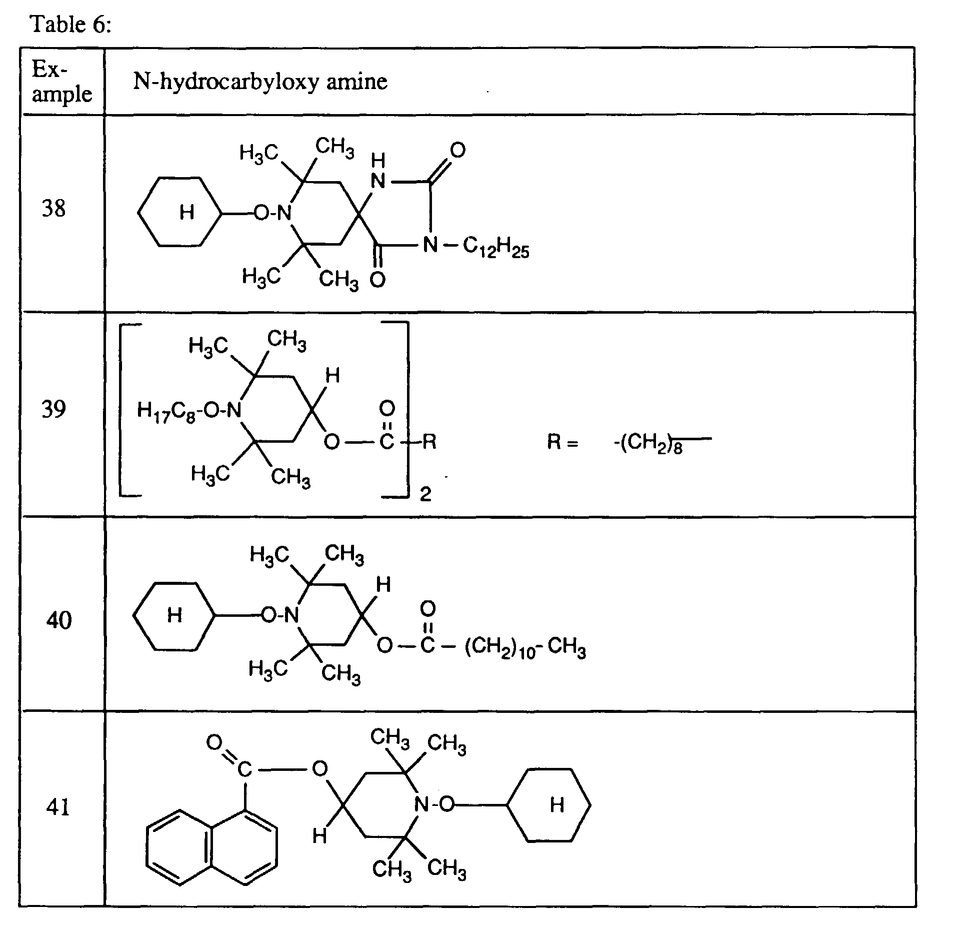

Examples 42-44: Example 38 is repeated, with the exception that the pigment of the formula XIV is replaced by the same amount by weight of the pigment of the formula XVII and the N-hydrocarbyloxy amine by the same amount of the N-hydrocarbyloxy amines shown in Table 7 below. In all the examples, better weathering resistance is observed than in the corresponding control coloured coating.

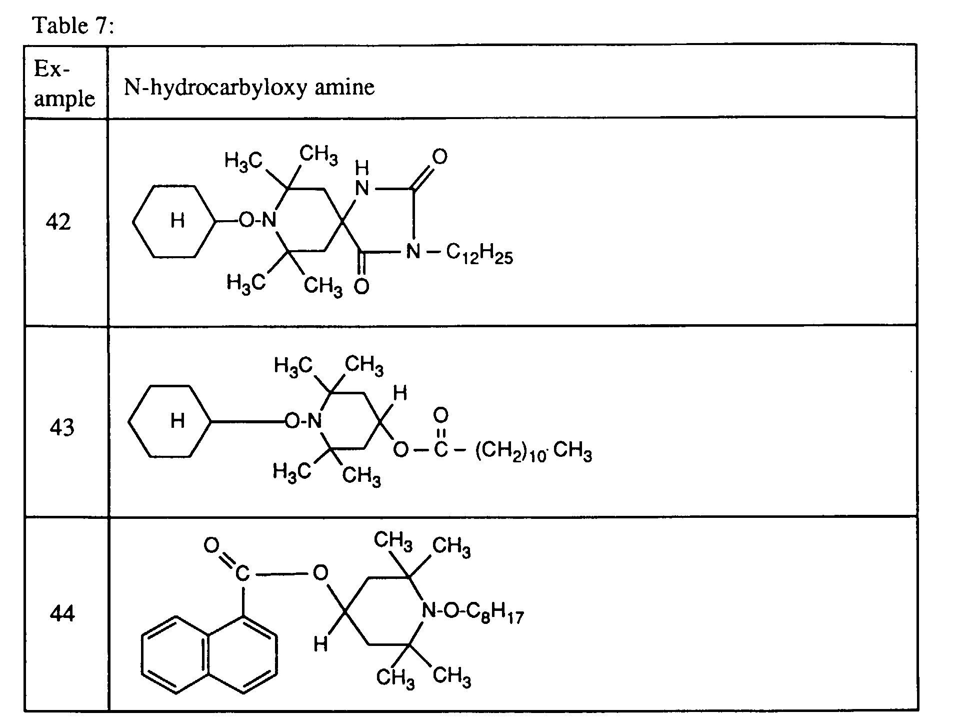

Examples 45-47: 0.5 g of the pigment of the formula XIV, 0.1 g of one of the N-hydrocarbyloxy amine shown in Table 8 below and 16.2 g of a nitrocellulose printing ink comprising 11 g of nitrocellulose A 250, 9 g of DOWANOL PM® (Dow Chem.), 20 g of ethyl acetate and 60 g of ethanol are mixed by conventional methods. The printing ink obtained is applied to paper. The light stability is determined by the fadeometer test after exposure for 500 hours.

All three examples show better light fastnesss than the corresponding control, which is obtained in the same way, but without addition of the N-hydrocarbyloxy amine.

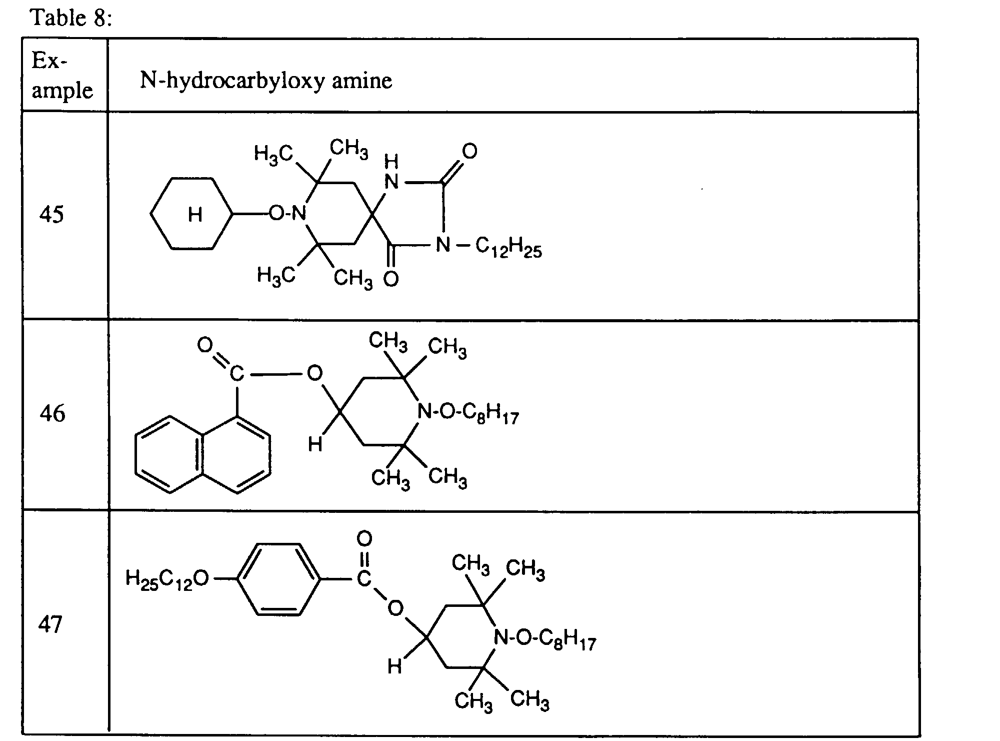

Examples 48-50: Examples 45-47 are repeated, with the single exception that the pigment of the formula XIV is replaced by the same amount by weight of the pigment of the formula XVII. These examples also show better light stability than in the corresponding control coloured coating.

Examples 51-53: 0.7 g of the pigment of the formula XIV and 0.35 g of one of the N-hydrocarbyloxy amine shown in Table 9 below are mixed in dry form with 700 g of polyethylene VESTOLEN A 6016® (Hüls) and 1.4 g of calcium carbonate MILICARB®. The mixture is subsequently extruded twice at 200°C in a single-screw extruder. The resultant granules are converted into sheets in an injection-moulding machine at 200°C. The weathering resistance is determined by weathering the sheets as described in Example 1 for the coloured coatings. These examples also show better weathering resistance than in the corresponding control coloured coating without N-hydrocarbyloxy amine.

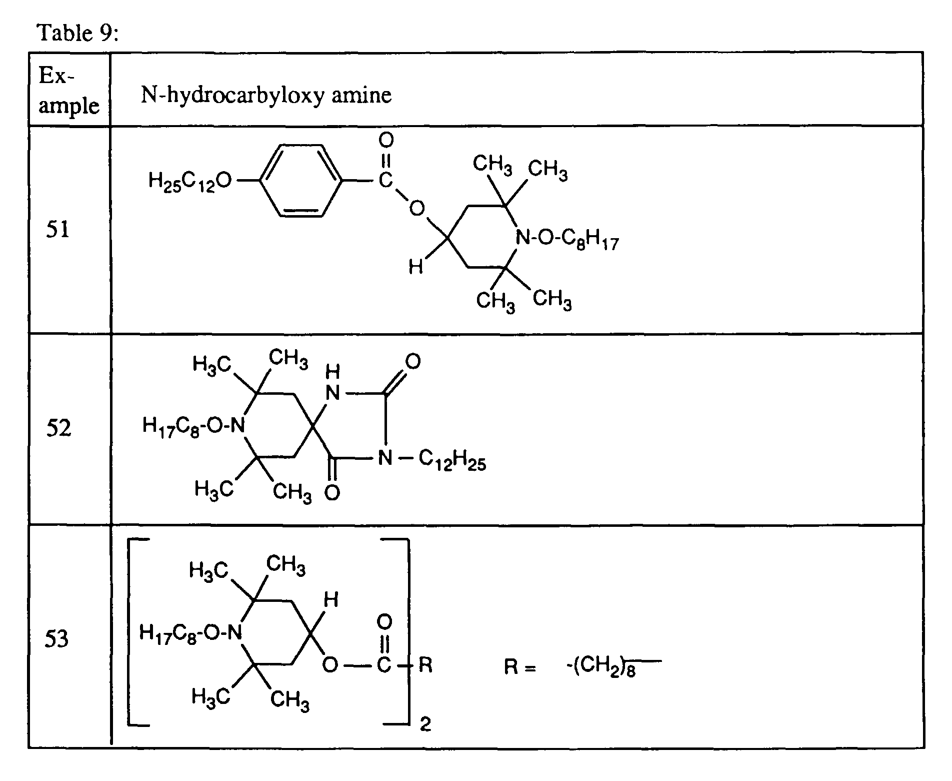

## Claims

1. A light-stabilised pigment composition comprising
a) at least one pyrrolo[3,4-c]pyrrole pigment of the formula 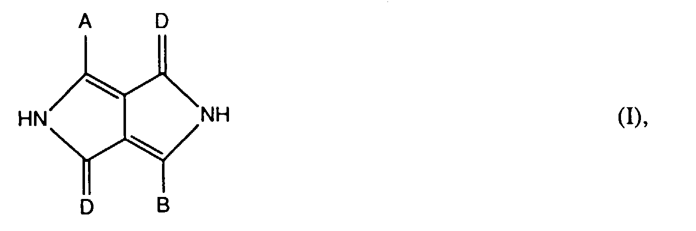 in which A and B, independently of one another, are isocyclic or heterocyclic aromatic radicals, and D is an oxygen or sulfur atom, and
b) from 1 to 100 % by weight, based on the pigment, of an N-hydrocarbyloxy amine.

2. A pigment composition according to claim 1, wherein the pigment is a pyrrolo[3,4-c]pyrrole of the formula I in which A and B, independently of one another, are groups of the formula 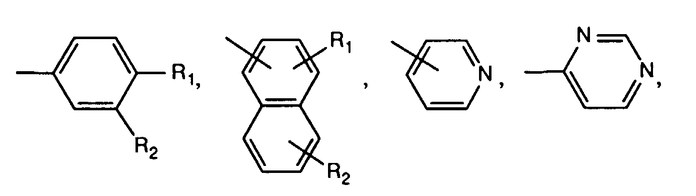 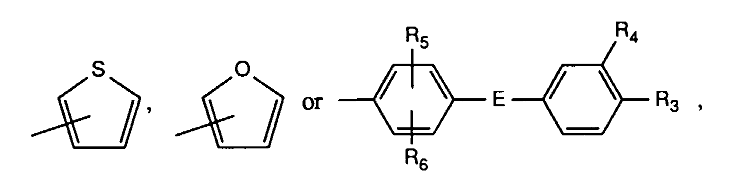 in which
R₁ and R₂, independently of one another, are hydrogen, halogen, C₁-C₆alkyl, C₁-C₁₈alkoxy, C₁-C₁₈alkylmercapto, C₁-C₁₈alkylamino, CN, NO₂, phenyl, trifluoromethyl, C₅-C₆cycloalkyl, imidazolyl, pyrrazolyl, triazolyl, piperazinyl, pyrrolyl, oxazolyl, benzoxazolyl, benzothiazolyl, benzimidazolyl, morpholinyl, piperidinyl or pyrrolidinyl,
E is -O-, -S-, -SO-, -SO₂- or -NR₇-,
R₃ and R₄, independently of one another, are hydrogen, halogen, C₁-C₆alkyl, C₁-C₁₈alkoxy or CN,
R₅ and R₆, independently of one another, are hydrogen, halogen or C₁-C₆alkyl, and
R₇ is hydrogen or C₁-C₆alkyl.

3. A pigment composition according to claim 2, wherein the pigment is a pyrrolo[3,4-c]pyrrole of the formula I in which A and B, independently of one another, are groups of the formula 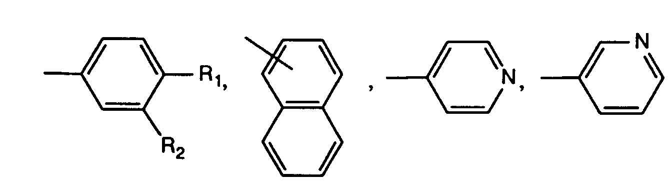 or 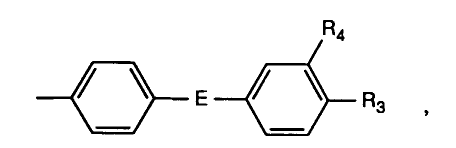 in which
R₁ and R₂, independently of one another, are hydrogen, chlorine, bromine, C₁-C₄alkyl, C₁-C₆alkoxy, C₁-C₆alkylamino, CN or phenyl,
E is -O-, -NR₇- or -SO₂-,
R₃ and R₄ are hydrogen,
R₇ is hydrogen, methyl or ethyl, and
D is an oxygen atom.

4. A pigment composition according to claim 2, wherein the pigment is a pyrrolo[3,4-c]pyrrole of the formula 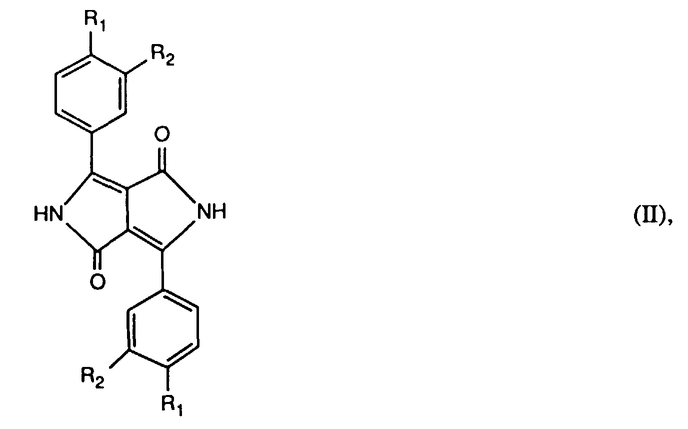 in which R₁ and R₂, independently of one another, are hydrogen, methyl, tert-butyl, chlorine, bromine, CN or phenyl.

5. A pigment composition according to claim 1, wherein the N-hydrocarbyloxy amine is employed in an amount of 5-100 % by weight, based on the pigment.

6. A pigment composition according to claim 1, wherein the N-hydrocarbyloxy amine is a compound of the formula 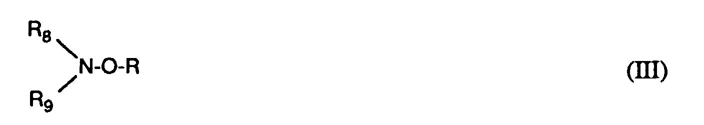 or a compound containing at least a group of the formula 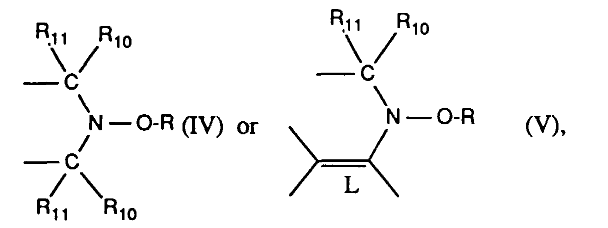 in which R is C₁-C₁₈alkyl, C₂-C₁₂alkenyl, C₂-C₁₂alkynyl, C₅-C₁₂cycloalkyl, C₆-C₁₀aryl or C₇-C₁₂aralkyl and R₈ and R₉, independently of one another, are phenyl or naphthyl, which is unsubstituted or monosubstituted or disubstituted by C₁-C₁₈alkyl, C₁-C₁₈alkoxy or C₂-C₁₂alkenyl, or R₈ and R₉ together form a 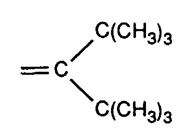 group,
R₁₀ and R₁₁, independently of one another, are methyl, ethyl or phenyl, or together form a 4-12-membered aliphatic ring, or R₁₀ is hydrogen and the two R₁₁ radicals together are a divalent radical which, together with the 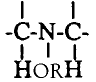 group, form a 4-, 5- or 6-membered ring, and
L is an aromatic radical.

7. A pigment composition according to claim 6, wherein a N-hydrocarbyloxy amine containing at least one group of the formula IV or V in which R₁₀ and R₁₁ are methyl is used.

8. A pigment composition according to claim 6, wherein a N-hydrocarbyloxy amine of the formula 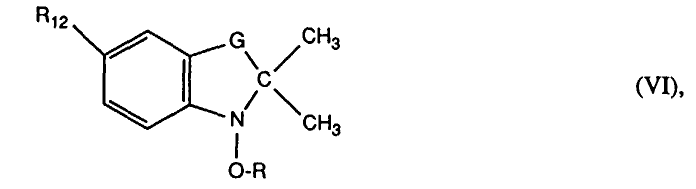 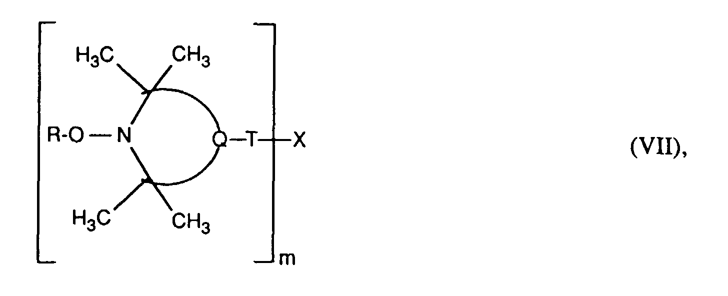 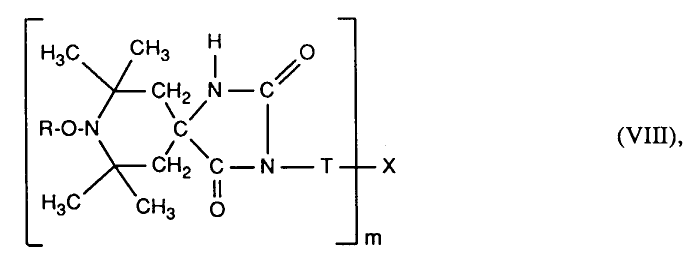 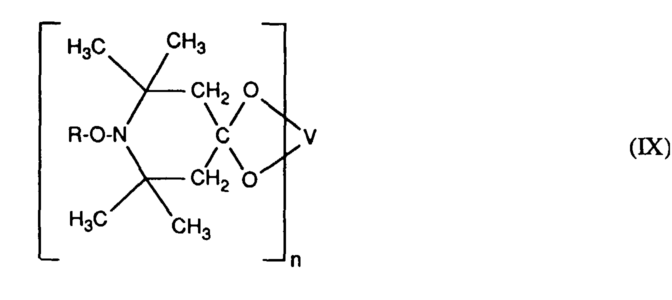 or 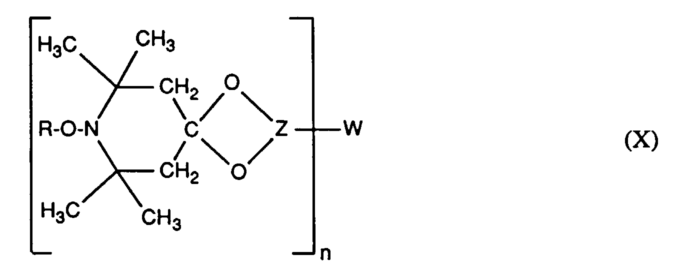 is used in which
R is tert.-butyl, C₇-C₁₈-alkyl or C₅-C₆-cycloalkyl,
R₁₂ is C₁-C₁₈alkyl or C₁-C₁₈alkoxy,
G is a divalent group of the formula -CR₁₃-CH₂- or -CHR₁₃-CH₂- and
R₁₃ is C₁-C₁₈alkyl,
Q is a group of the formula 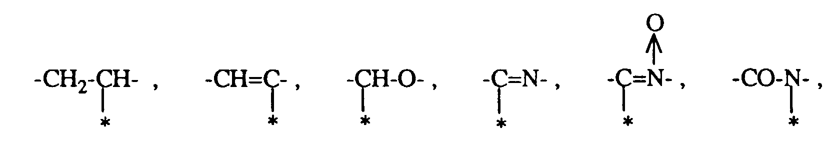 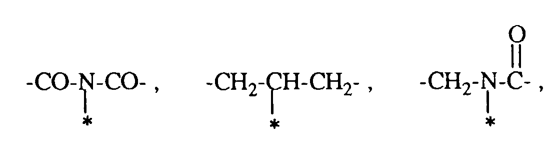 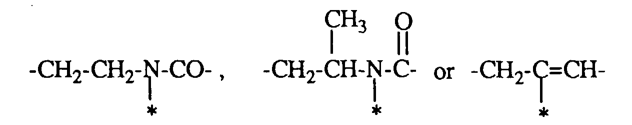 in which the bond denoted by * is the bond leading to T,
T is a direct bond or a group of the formula 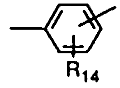 in which R₁₄ is hydrogen, halogen or C₁-C₄alkyl, or is -(CH₂)ᵣ-, in which r is 1 or 2,
m is the number 1, 2, 3, 4 or 6,
X, if m = 1, is hydrogen, C₁-C₁₈alkyl, phenyl which is unsubstituted or substituted by C₁-C₄alkyl, C₁-C₄alkoxy, phenyl or halogen, or, under the condition that T, if bonded to a nitrogen atom, is not a direct bond, is a group of the formula -OCO-NR₁₅R₁₆, -OSO₂-NR₁₅R₁₆, -OCO-R₁₆, -COOR₁₆, -CONR₁₅R₁₆, -NR₁₅-COR₁₆, -NR₁₅-CONR₁₅R₁₆, -OR₁₆, -NR₁₅R₁₆, 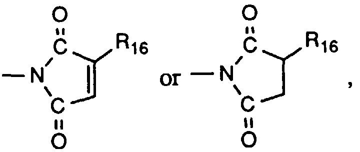 in which R₁₅ is hydrogen or C₁-C₁₈alkyl, R₁₆ is C₁-C₁₈alkyl, C₂-C₁₂alkenyl, C₅-C₁₂cycloalkyl, phenyl or naphthyl which is unsubstituted or substituted by C₁-C₄alkyl, C₁-C₄alkoxy, halogen, phenyl or nitro, or a -(CH₂)ₛ-CHR₁₇R₁₈ group where s is zero, 1, 2 or 3, R₁₇ is hydrogen, methyl or phenyl, and R₁₈ is -OH, halogen, -COOCH₃ or -COOC₂H₅,
if m = 2, is a group of the formula
-(CH₂ 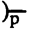 or, under the condition that T, if bonded to a nitrogen atom, is not a direct bond, a group of the formula -O-(CH₂)ₚ-O-, -NR₁₅-(CH₂)ₚ-NR₁₅-, -OCO-F-COO-, -NR₁₅-CO-F-CO-NR₁₅-, -OCO-NH-F-NH-COO- or -NR₁₅-CONH-F-NHCO-NR₁₅-, in which F is -(CH₂)ₚ-, 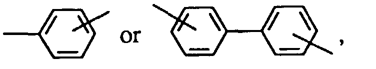 and p is a number between 2 and 10,
if m = 3, is a 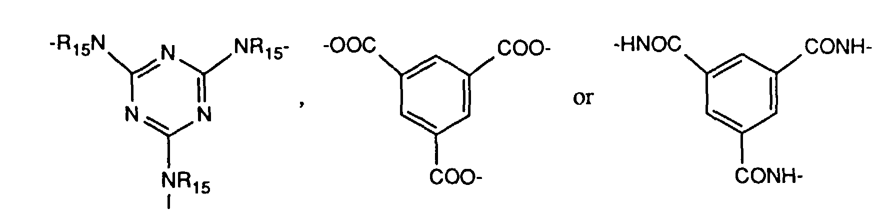 group, and
if m = 4, is a 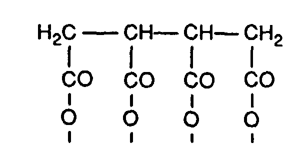 group, and
if m = 6, is a 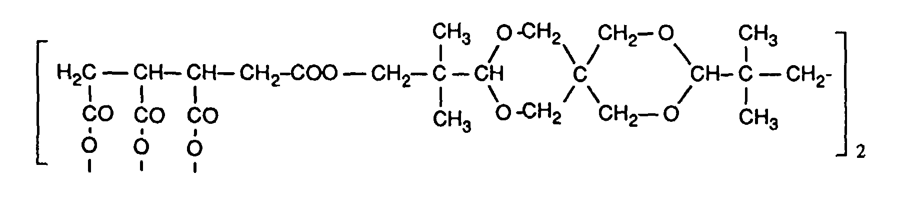 group,
n is the number 1 or 2,
V, if n = 1, is C₂-C₈alkylene, hydroxyalkylene or C₄-C₂₂acyloxyalkylene, and, if n = 2, is the (-CH₂)₂C(CH₂-)₂ or 〉C〈 group, and
Z is a group of the formula 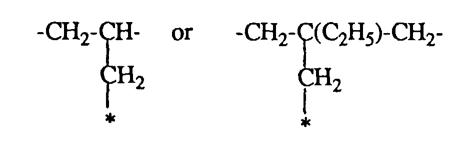 in which the bond denoted by * is the bond leading to W, and
W, if n = 1, is a -OCOR₁₉ group, in which R₁₉ is C₁-C₁₈alkyl, or phenyl or naphthyl which is unsubstituted or substituted by C₁-C₄alkyl, C₁-C₄alkoxy or halogen, and if n = 2, is a group of the formula -OCO-(CH₂)ₚ-COO- or

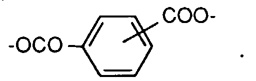

9. A pigment composition according to claim 8, wherein an N-hydrocarbyloxy amine of the formula VII, VIII or IX as defined in claim 8 is used.

10. A pigment composition according to claim 8, wherein an N-hydrocarbyloxy amine of the formula 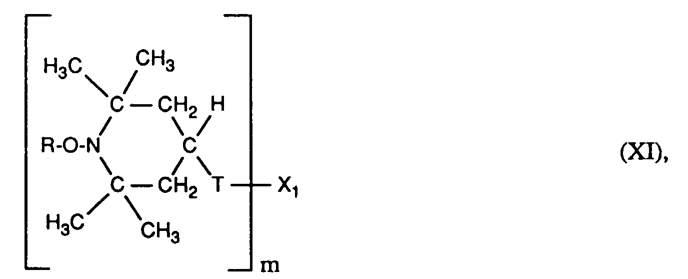 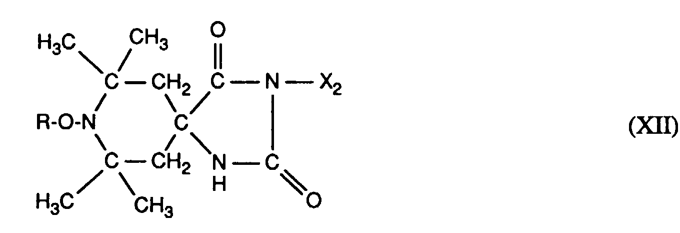 or 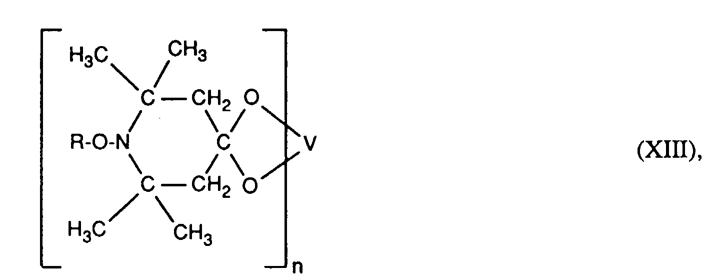 is used in which
R is as defined in claim 8
T is a direct bond,
m is 1, 2 or 3,
X₁, if m = 1, is C₁-C₁₈alkyl, -OCO-R₁₆, -NR₁₅-COR₁₆ or 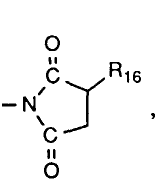 in which R₁₅ is hydrogen or or C₁-C₁₈alkyl, and R₁₆ is C₁-C₁₈alkyl, or phenyl or naphthyl which is unsubstituted or substituted by C₁-C₄alkyl, C₁-C₄alkoxy, phenyl or halogen,
if m = 2, is a -OCO-(CH₂)ₚ-OCO- or -NR₁₅CO-(CH₂)ₚ-CONR₁₅- group in which p is a number between 2 and 8, 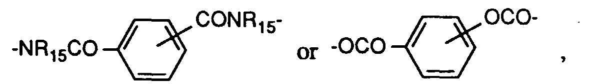 and
if m = 3, is a 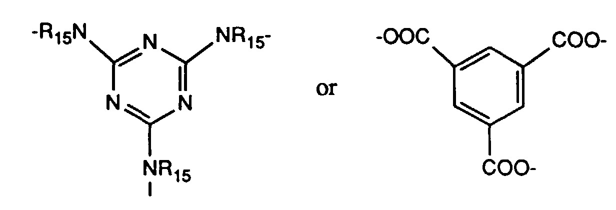 group,
X₂ is C₁-C₁₈alkyl,
n is the number 2, and
V is the (-CH₂)₂C(CH₂-)₂ or 〉C〈 group.

11. A pigment composition according to claim 10, wherein an N-hydrocarbyloxy amine of the formula XI or XII is used in which R is tert.-butyl, n-heptyl, n-octyl or cyclohexyl, T is a direct bond, X₁, if m is 1, is benzoyloxy or naphthyloxy, if m is 2, is a group -OCO-(CH₂)ₚ-OCO- in which p is a number between 2 and 8, and X₂ is C₈-C₁₈alkyl.

12. A process for the light-stabilisation of pyrrolo[3,4-c]pyrrole pigments of the formula 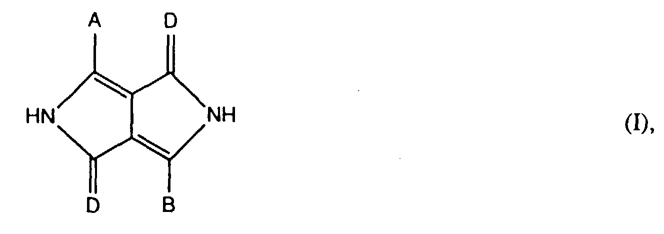 in which A and B, independently of one another, are isocyclic or heterocyclic aromatic radicals, and D is an oxygen or sulfur atom,
comprising mixing or coating the pigment particles with from 1 to 100 % by weight, based on the pigment, of an N-hydrocarbyloxy amine.

13. A high-molecular-weight organic material comprising a pigment composition according to claim 1.

14. A high-molecular-weight organic material according to claim 13, in the form of a paint.

15. A high-molecular-weight organic material according to claim 14, in the form of an automotive paint.

## Patentansprüche

1. Lichtstabilisierte Pigmentzusammensetzung, umfassend
a) wenigstens ein Pyrrolo[3,4-c]pyrrol-Pigment der Formel 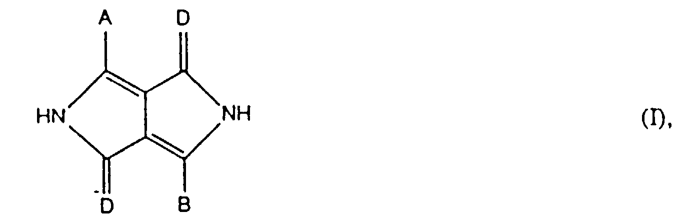 worin A und B unabhängig voneinander isocyclische oder heterocyclische aromatische Reste sind, und D ist ein Sauerstoff- oder Schwefelatom, und
b) von 1 bis 100 Gewichts-%, bezogen auf das Pigment, eines N-Hydrocarbyloxyamins.

2. Pigmentzusammensetzung nach Anspruch 1, worin das Pigment ein Pyrrolo[3,4-c]pyrrol-Pigment der Formel I ist, worin A und B unabhängig voneinander Gruppen der Formel 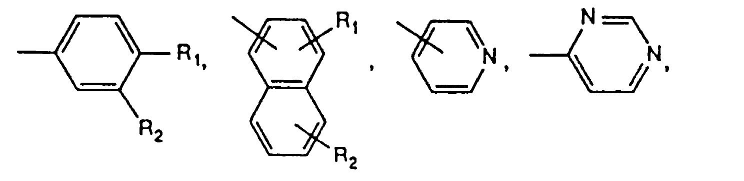 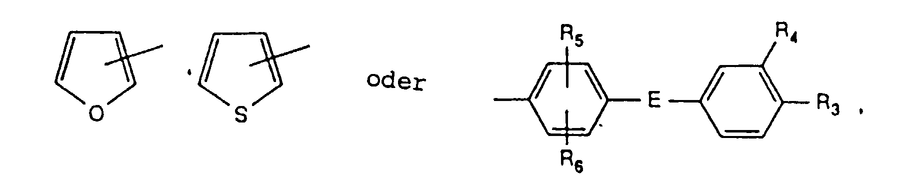 darstellen, worin
R₁ und R₂ unabhängig voneinander Wasserstoff, Halogen, C₁-C₆-Alkyl, C₁-C₁₈-Alkoxy, C₁-C₁₈-Alkylmercapto, C₁-C₁₈-Alkylamino, CN, NO₂, Phenyl, Trifluormethyl, C₅-C₆-Cycloalkyl, Imidazolyl, Pyrrazolyl, Triazolyl, Piperazinyl, Pyrrolyl, Oxazolyl, Benzoxazolyl, Benzothiazolyl, Benzimidazolyl, Morpholinyl, Piperidinyl oder Pyrrolidinyl darstellen,
E ist -O-, -S-, -SO-, -SO₂- oder -NR₇-,
R₃ und R₄ sind unabhängig voneinander Wasserstoff, Halogen, C₁-C₆-Alkyl, C₁-C₁₈-Alkoxy oder CN,
R₅ und R₆ sind unabhängig voneinander Wasserstoff, Halogen oder C₁-C₆-Alkyl, und
R₇ ist Wasserstoff oder C₁-C₆-Alkyl.

3. Pigmentzusammensetzung nach Anspruch 2, worin das Pigment ein Pyrrolo[3,4-c]pyrrol der Formel I ist, worin A und B unabhängig voneinander Gruppen der Formel 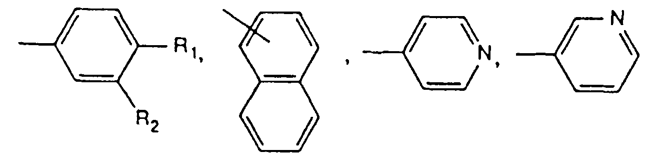 oder 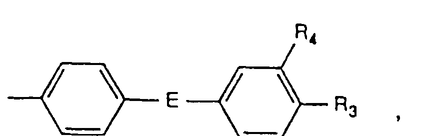 sind, worin R₁ und R₂ unabhängig voneinander Wasserstoff, Chlor, Brom, C₁-C₄-Alkyl, C₁-C₆-Alkoxy, C₁-C₆-Alkylamino, CN oder Phenyl sind,
E ist -O-, -NR₇- oder -SO₂-,
R₃ und R₄ sind Wasserstoff,
R₇ ist Wasserstoff, Methyl oder Ethyl, und
D ist ein Sauerstoffatom.

4. Pigmentzusammensetzung nach Anspruch 2, worin das Pigment ein Pyrrolo[3,4-c]pyrrol der Formel 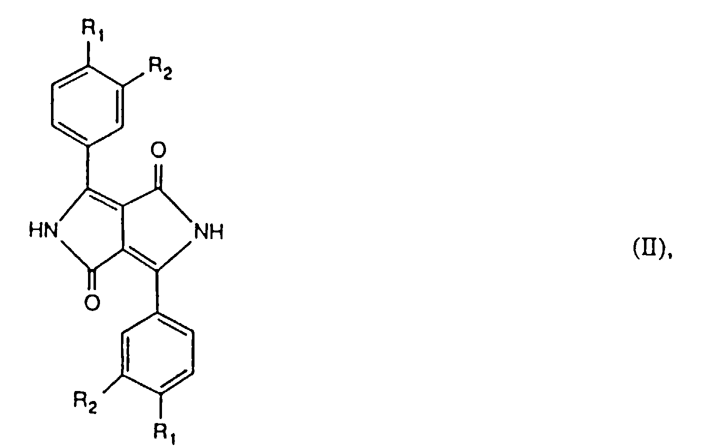 ist, worin R₁ und R₂ unabhängig voneinander Wasserstoff, Methyl, tert-Butyl, Chlor, Brom, CN oder Phenyl sind.

5. Pigmentzusammensetzung nach Anspruch 1, worin das N-Hydrocarbyloxyamin in einer Menge von 5 bis 100 Gewichts-% eingesetzt wird, bezogen auf das Pigment.

6. Pigmentzusammensetzung nach Anspruch 1, worin das N-Hydrocarbyloxyamin eine Verbindung der Formel 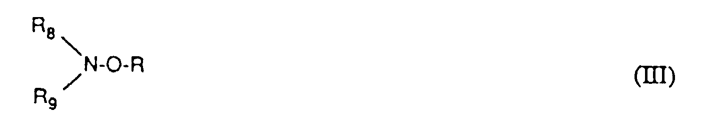 ist oder eine Verbindung, die wenigstens eine Gruppe der Formel 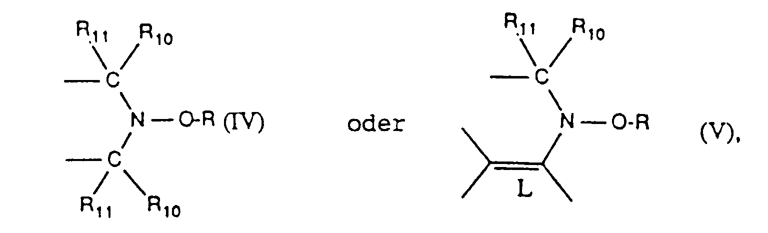 enthält, worin R die Bedeutung hat C₁-C₁₈-Alkyl, C₂-C₁₂-Alkenyl, C₂-C₁₂-Alkinyl, C₅-C₁₂-cycloalkyl, C₆-C₁₀-Aryl oder C₇-C₁₂-Aralkyl, und R₈ und R₉ sind unabhängig voneinander Phenyl oder Naphthyl, das unsubstituiert ist oder monosubstituiert oder disubstituiert durch C₁-C₁₈-Alkyl, C₁-C₁₈-Alkoxy oder C₂-C₁₂-Alkenyl, oder R₈ und R₉ bilden zusammen eine Gruppe 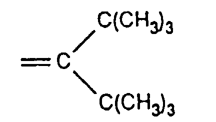 R₁₀ und R₁₁ sind unabhängig voneinander, Methyl, Ethyl oder Phenyl, oder bilden zusammen einen 4-12-gliedrigen aliphatischen Ring, oder R₁₀ ist Wasserstoff und die beiden R₁₁-Reste zusammen sind ein zweiwertiger Rest, der zusammen mit der 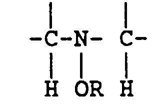 Gruppe einen 4-, 5- oder 6-gliedrigen Ring bildet, und L ist ein aromatischer Rest.

7. Pigmentzusammensetzung nach Anspruch 6, worin ein N-Hydrocarbyloxyamin verwendet wird, das wenigstens eine Gruppe der Formel IV oder V enthält, worin R₁₀ und R₁₁ Methyl sind.

8. Pigmentzusammensetzung nach Anspruch 6, worin ein N-Hydrocarbyloxyamin der Formel 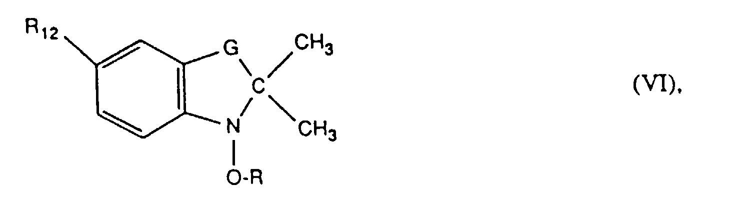 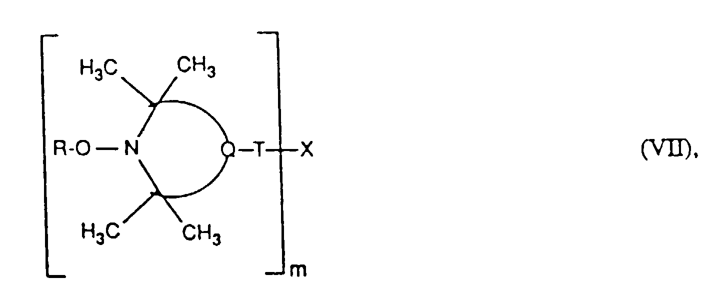 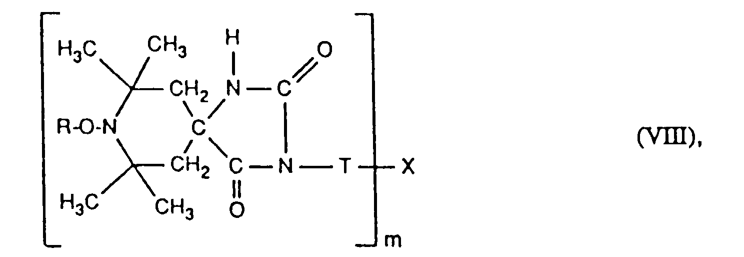 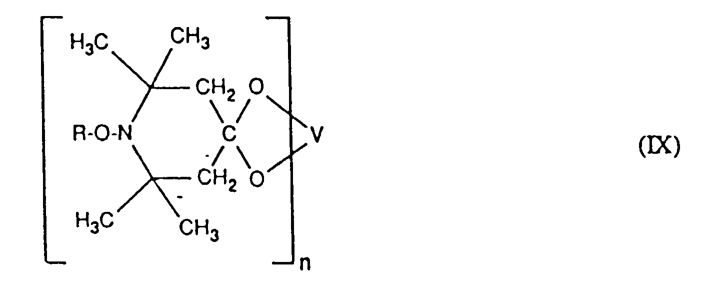 oder 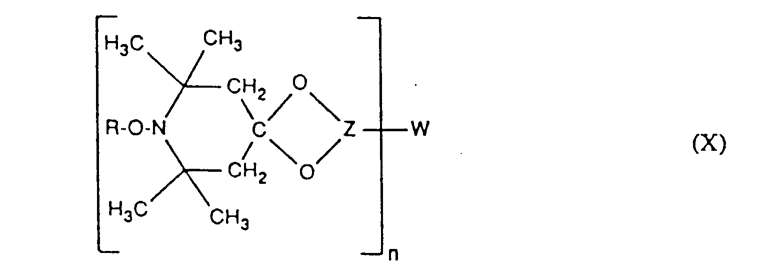 verwendet wird, worin
R die Bedeutung tert-Butyl, C₇-C₁₈-Alkyl oder C₅-C₆-cycloalkyl hat,
R₁₂ ist C₁-C₁₈-Alkyl oder C₁-C₁₈-Alkoxy,
G ist eine zweiwertige Gruppe der Formel -CR₁₃-CH₂- oder -CHR₁₃-CH₂- und
R₁₃ ist C₁-C₁₈-Alkyl,
Q ist eine Gruppe der Formel 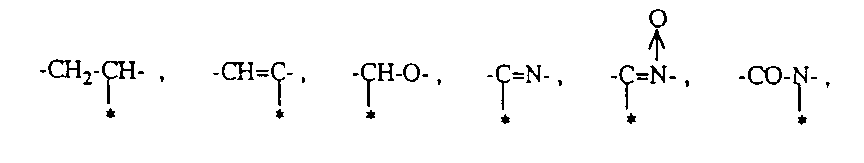 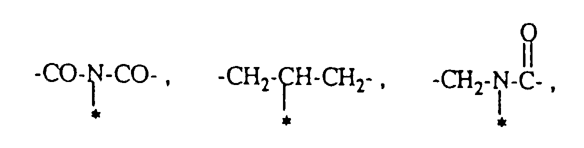 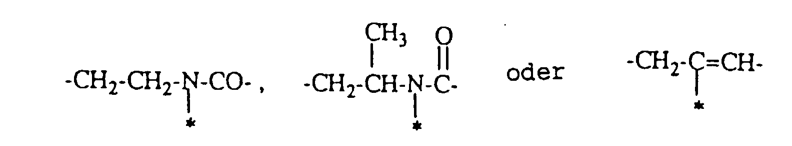 worin die mit * bezeichnete Bindung die zu T führende Bindung ist,
T ist eine Direktbindung oder eine Gruppe der Formel 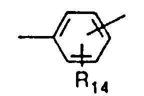 worin R₁₄ Wasserstoff, Halogen oder C₁-C₄-Alkyl ist, oder -(CH₂)ᵣ-ist, worin r die Bedeutung 1 oder 2 hat,
m ist die Zahl 1, 2, 3, 4 oder 6,
X ist, wenn m = 1, Wasserstoff, C₁-C₁₈-Alkyl, unsubstituiertes oder durch C₁-C₄-Alkyl, C₁-C₄-Alkoxy, Phenyl oder Halogen substituiertes Phenyl, oder ist unter der Bedingung, daß T, wenn es an ein Stickstoffatom gebunden ist, keine Direktbindung ist, eine Gruppe der Formel -OCO-NR₁₅R₁₆, -OSO₂-NR₁₅R₁₆, -OCO-R₁₆ -COOR₁₆,-CONR₁₅R₁₆, -NR₁₅-COR₁₆, -NR₁₅-CONR₁₅R₁₆, -OR₁₆, -NR₁₅R₁₆, 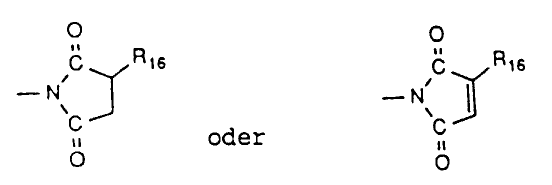 worin R₁₅ Wasserstoff oder C₁-C₁₈-Alkyl ist, R₁₆ ist C₁-C₁₈-Alkyl, C₂-C₁₂-Alkenyl, C₅-C₁₂-Cycloalkyl, Phenyl oder Naphthyl, das unsubstituiert ist oder substituiert durch C₁-C₄-Alkyl, C₁-C₄-Alkoxy, Halogen, Phenyl oder Nitro, oder eine Gruppe -(CH₂)ₛ-CHR₁₇R₁₈, worin s die Bedeutung null, 1, 2 oder 3 hat, R₁₇ ist Wasserstoff, Methyl oder Phenyl, und R₁₈ ist -OH, Halogen, -COOCH₃ oder -COOC₂H₅, wenn m = 2, ist es eine Gruppe der Formel -(CH₂)ₚ, oder unter der Bedingung, daß T, wenn es an ein Stickstoffatom gebunden ist, keine Direktbindung ist, eine Gruppe der Formel -O-(CH₂)ₚ-O-, -NR₁₅-(CH₂)ₚ-NR₁₅-, -OCO-F-COO-, -NR₁₅-CO-F-CO-NR₁₅-, -OCO-NH-F-NH-COO- oder -NR₁₅-CONH-F-NHCO-NR₁₅- ist, worin F die Bedeutung -(CH₂)ₚ, 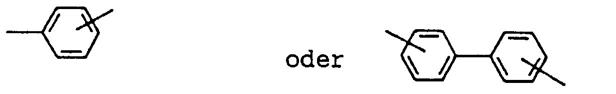 hat, und p ist eine Zahl zwischen 2 und 10, wenn m = 3, ist es die Gruppe 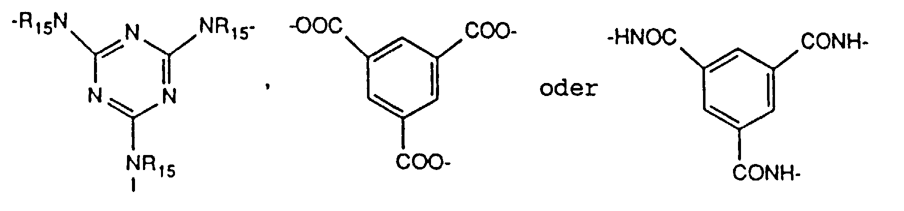 und wenn m = 4, ist es die Gruppe 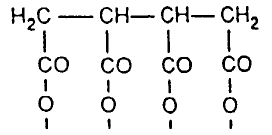 und
wenn m = 6, ist a die Gruppe 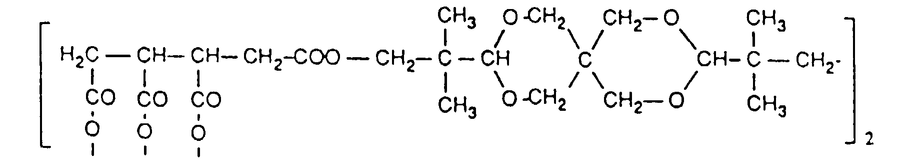
n ist die Zahl 1 oder 2,
V ist, wenn n = 1, C₂-C₈-Alkylen, Hydroxyalkylen oder C₄-C₂₂-Acyloxyalkylen, und wenn n = 2, ist es die Gruppe (-CH₂)₂C(CH₂)₂ oder die Gruppe 〉C〈 und
Z ist eine Gruppe der Formel 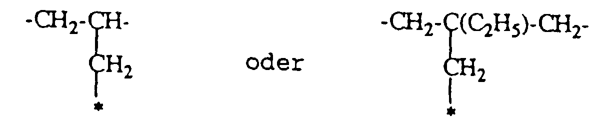 worin die durch * bezeichnete Bindung die zu W führende Bindung ist, und
W ist, wenn n = 1, eine Gruppe -OCOR₁₉, worin R₁₉ die Bedeutung C₁-C₁₈-Alkyl oder Phenyl oder Naphthyl hat, das unsubstituiert ist oder durch C₁-C₄-Alkyl, C₁-C₄-Alkoxy oder Halogen substituiert ist, und wenn n = 2, ist es eine Gruppe der Formel -OCO-(CH₂)ₚ-COO- oder.

9. Pigmentzusammensetzung nach Anspruch 8, worin ein N-Hydrocarbyloxyamin der Formel VII, VIII oder IX gemäß Definition in Anspruch 8 verwendet wird.

10. Pigmentzusammensetzung nach Anspruch 8, worin ein N-Hydrocarbyloxyamin der Formel 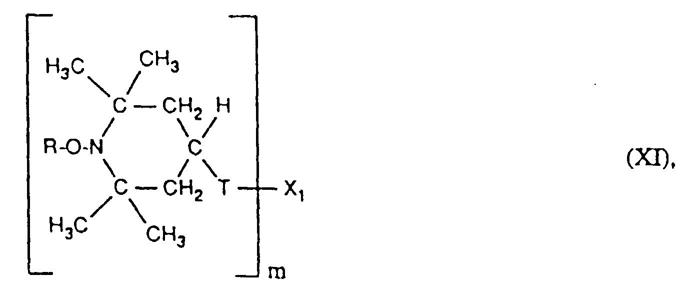 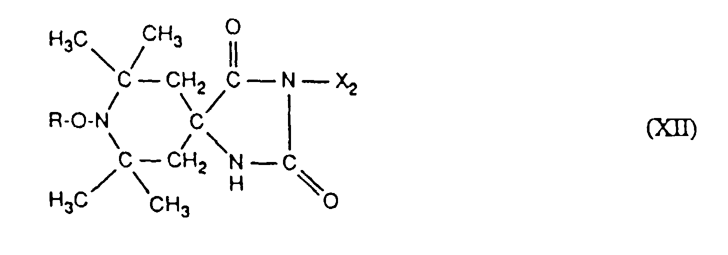 oder 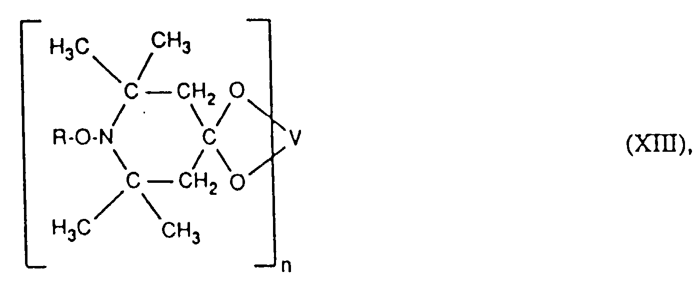 worin
R wie in Anspruch 8 definiert ist,
T eine Direktbindung ist,
m ist 1, 2 oder 3,
X₁ ist, wenn m = 1, C₁-C₁₈-Alkyl, -OCO-R₁₆) , -NR₁₅-COR₁₆ oder 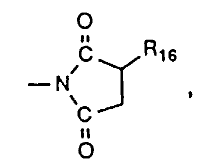 worin R₁₅ Wasserstoff oder C₁-C₁₈-Alkyl ist, und R₁₆ ist C₁-C₁₈-Alkyl oder Phenyl oder Naphthyl, das unsubstituiert ist oder substituiert durch C₁-C₄-Alkyl, C₁-C₄-Alkoxy, Phenyl oder Halogen,
wenn m = 2, ist es eine Gruppe -OCO-(CH₂)ₚ-OCO- oder -NR₁₅CO-(CH₂)ₚ-CONR₁₅-, in der p eine Zahl zwischen 2 und 8 ist, 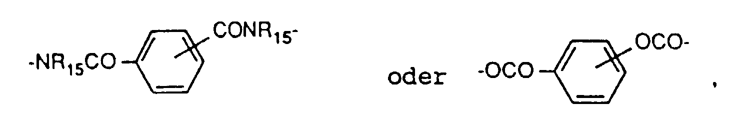 und
wenn m = 3, ist es eine Gruppe 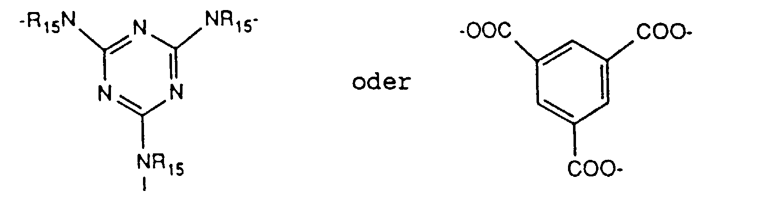
X₂ ist C₁-C₁₈-Alkyl,
n ist die Zahl 2, und
V ist die Gruppe (-CH₂)₂C(CH₂-)₂ oder 〉C〈.

11. Pigmentzusammensetzung nach Anspruch 10, worin ein N-Hydrocarbyloxyamin der Formel XI oder XII verwendet wird, worin R die Bedeutung tert-Butyl, n-Heptyl, n-Octyl oder Cyclohexyl hat, T ist eine Direktbindung, X₁ ist, wenn m = 1, Benzoyloxy oder Naphthyloxy, wenn m = 2, ist es eine Gruppe -OCO-(CH₂)ₚ-COO-, in der p eine Zahl zwischen 2 und 8 ist, und X₂ ist C₈-C₁₈-Alkyl.

12. Verfahren zur Lichtstabilisierung von Pyrrolo[3,4-c]pyrrol-Pigmenten der Formel 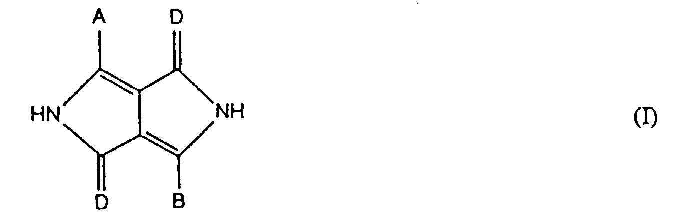 worin A und B unabhängig voneinander isocyclische oder heterocyclische aromatische Reste sind, und D ist ein Sauerstoff- oder Schwefelatom, gekennzeichnet durch das Vermischen oder die Beschichtung der Pigmentteilchen mit 1 bis 100 Gewichts-%, bezogen auf das Pigment, einem wie oben definierten N-Hydrocarbyloxyamin.

13. Organisches Material mit hohem Molekulargewicht, umfassend eine Pigmentzusammensetzung gemäß Anspruch 1.

14. Organisches Material mit hohem Molekulargewicht nach Anspruch 13 in Form einer Farbe.

15. Organisches Material mit hohem Molekulargewicht nach Anspruch 14 in Form eines Autolackes.

## Revendications

1. Composition de pigment stabilisé à la lumière comprenant
a) au moins un pigment pyrrolo[3,4-c]pyrrole de formule 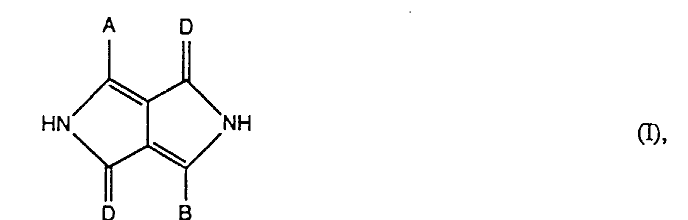 dans laquelle A et B, indépendamment l'un de l'autre, sont des radicaux aromatiques isocycliques ou hétérocycliques et D est un atome d'oxygène ou de soufre, et
b) de 1 à 100% en poids, basé sur le pigment, d'une N-hydrocarbyloxyamine.

2. Composition de pigment selon la revendication 1, dans laquelle le pigment est un pyrrolo[3-4]pyrrole de formule 1 dans laquelle A et B, indépendamment l'un de l'autre, sont des groupes de formule 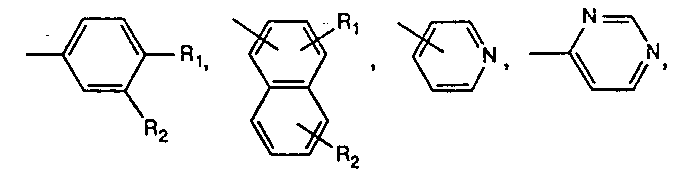 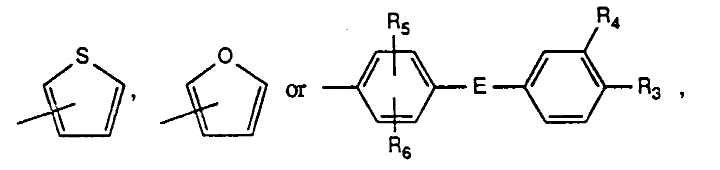 dans lesquelles
R₁ et R₂, indépendamment l'un de l'autre, représentent un atome d'hydrogène, d'halogène, un groupe alkyle en C₁ à C₆, alkoxy en C₁ à C₁₈, alkylmercapto en C₁ à C₁₈, alkylamino en C₁ à C₁₈, CN, NO₂, phényle, trifluorométhyle, cycloalkyle en C₅ à C₆, imidazolyle, pyrrazolyle, triazolyle, pipérazinyle, pyrrolyle, oxazolyle, benzoxazolyle, benzothiazolyle, benzimidazolyle, morpholinyle, piperidinyle ou pyrrolinidyle,
E représente -O-, -S-, -SO-, -SO₂- ou -NR₇-,
R₃ et R₄, indépendamment l'un de l'autre, représentent un atome d'hydrogène, d'halogène, un groupe alkyle en C₁ à C₆, alkoxy en C₁ à C₁₈ ou CN,
R₅ ou R₆, indépendamment l'un de l'autre, représentent un atome d'hydrogène, d'halogène ou un groupe alkyle en C₁ à C₆, et
R₇ représente un atome d'hydrogène ou un groupe alkyle C₁ à C₆.

3. Composition de pigment selon la revendication 2, dans laquelle le pigment est un pyrrolo[3,4-c]pyrrole de formule I dans laquelle A et B, indépendamment l'un de l'autre, représentent des groupes de formule 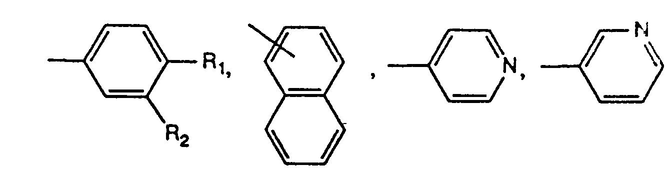 ou 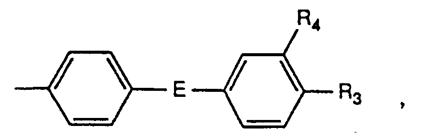 dans lesquelles R₁ et R₂, indépendamment l'un de l'autre, représentent un atome d'hydrogène, de chlore, de brome, un groupe alkyle en C₁ à C₄, alkoxy en C₁ à C₆, alkylamino en C₁ à C₆, CN ou phényle,
E représente -O-, -NR- ou -SO₂-,
R₃ et R₄ représentent un atome d'hydrogène,
R₇ représente un atome d'hydrogène, un groupe méthyle ou éthyle, et
D représente un atome d'oxygène.

4. Composition de pigment selon la revendication 2, dans laquelle le pigment représente un pyrrolo[3-4c]pyrrole de formule 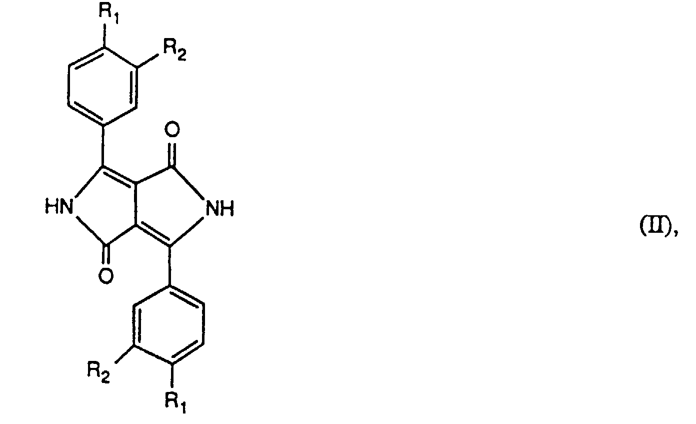 dans laquelle R₁ et R₂, indépendamment l'un de l'autre, représentent un atome d'hydrogène, de chlore, de brome, un groupe méthyle, tert-butyle, CN ou phényle.

5. Composition de pigment selon la revendication 1, dans laquelle la N-hydrocarbyloxyamine est employée à raison de 5 à 100% en poids, basé sur le pigment.

6. Composition de pigment selon la revendication 1, dans laquelle la N-hydrocarbyloxyamine représente un composé de formule 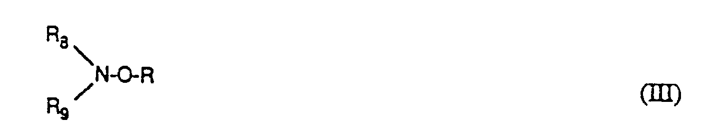 ou un composé contenant au moins un groupe de formule 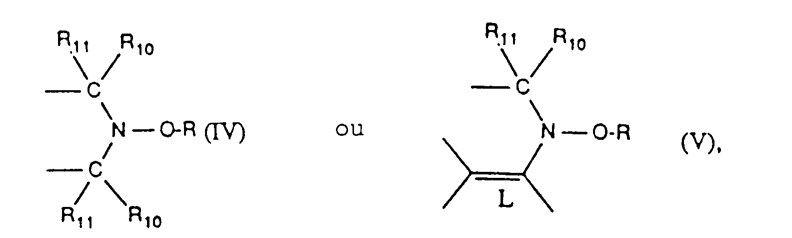 dans lesquelles R représente un groupe alkyle en C₁ à C₁₈, alcényle en C₂ à C₁₂, alcynyle en C₂ à C₁₂, cycloalkyle en C₅ à C₁₂, aryle en C₆ à C₁₀ ou aralkyle en C₇ à C₁₂ et R₈ et R₉, indépendamment l'un de l'autre, représentent un groupe phényle ou naphtyle, qui est non substitué ou monosubstitué ou disubstitué par un groupe alkyle en C₁ à C₁₈, alkoxy en C₁ à C₁₈, alcényle en C₁ à C₁₂, ou R₈ et R₉ forment ensemble un groupe 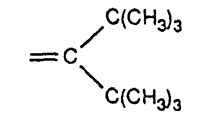 R₁₀ et R₁₁, indépendamment l'un de l'autre, représentent un groupe méthyle, éthyle ou phényle, ou forment ensemble un cycle aliphatique de 4 à 12 éléments, ou R₁₀ représente un atome d'hydrogène et les deux radicaux R₁₁ représentent un radical divalent qui conjointement avec le groupe 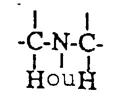 forme un cycle à 4, 5 ou 6 éléments, et
L représente un radical aromatique.

7. Composition de pigment selon la revendication 6, dans laquelle une N-hydrocarbyloxyamine contenant au moins un groupe de formule IV ou V, dans lesquelles R₁₀ et R₁₁ représentent un atome de méthyle est utilisée.

8. Composition de pigment selon la revendication 6, dans laquelle une N-hydrocarbyloxyamine de formules 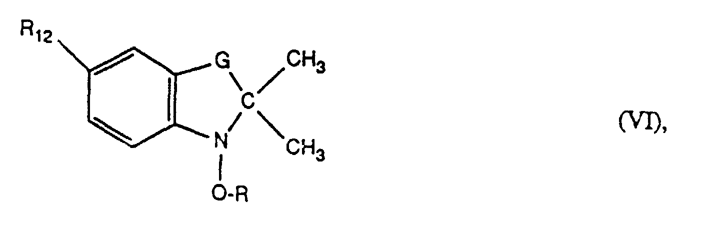 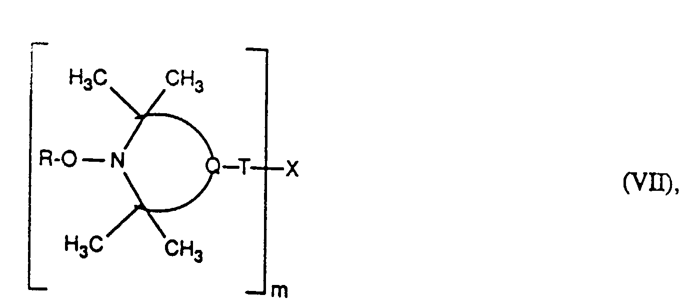 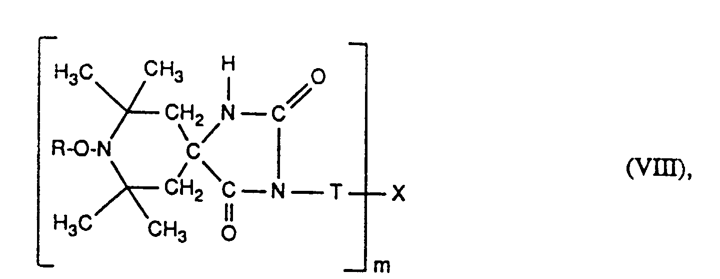 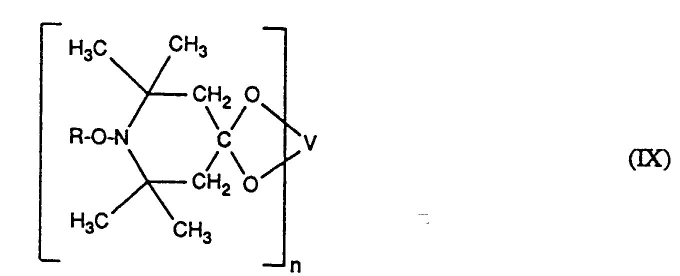 ou 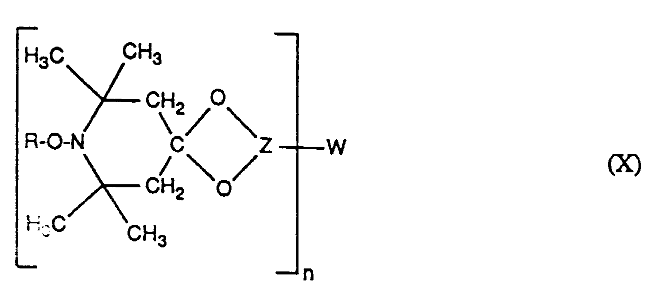 est utilisée dans lesquelles R représente un groupe de ter.-butyle, alkyle en C₇ à C₁₈ ou cycloalkyle en C₅ à C₆,
R₁₂ représente un groupe alkyle en C₁ à C₁₈ ou alkoxy en C₁ à C₁₈,
G représente un groupe divalent de formule -CR₁₃-CH₂- ou -CHR₁₃-CH₂- et
R₁₃ représente un groupe alkyle en C₁ à C₁₈,
Q représente un groupe de formule 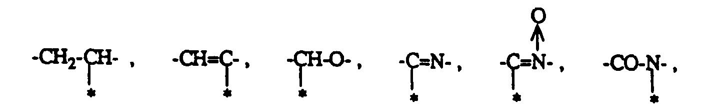 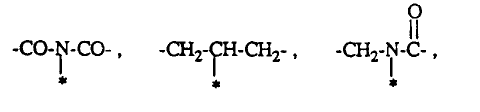 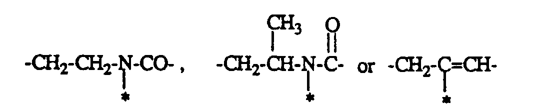 dans lesquelles la liaison indiquée par * est la liaison conduisant à T,
T est une liaison directe ou un groupe de formule 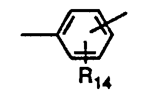 dans laquelle R₁₄ représente un atome d'hydrogène, d'halogène ou un groupe alkyle en C₁ à C₄, ou représente -(CH₂)ᵣ-, dans laquelle r vaut 1 ou 2,
m vaut 1, 2, 3, 4 ou 6,
X, si m=1, représente un atome d'hydrogène, un groupe alkyle en C₁ à C₁₈, phényle qui est non substitué ou substitué par un groupe alkyle en C₁ à C₄, alkoxy en C₁ à C₄, phényle ou halogéno, ou à condition que T, si lié à un atome d'azote, n'est pas une liaison directe, représente un groupe de formule -OCO-NR₁₅R₁₆, -OSO₂-NR₁₅R₁₆, -OCO-R₁₆, -COOR₁₆, -CONR₁₅R₁₆, -NR₁₅-COR₁₆, -NR₁₅-CONR₁₅R₁₆, -OR₁₆, -NR₁₅R₁₆, 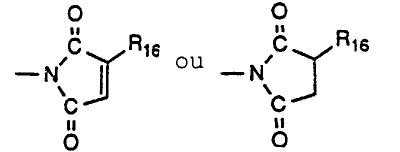 dans lesquelles
R₁₅ représente un atome d'hydrogène ou un groupe alkyle en C₁ à C₁₈,
R₁₆ représente un groupe alkyle en C₁ en C₁₈, alcényle en C₂ à C₁₂, cycloalkyle en C₅ à C₁₂, phényle ou naphtyle qui est non substitué ou substitué par un groupe alkyle en C₁ à C₄, alkoxy en C₁ à C₄, halogéno, phényle ou nitro, ou un groupe -(CH₂)ₛ-CHR₁₇R₁₈ où s vaut zéro, 1, 2 ou 3, R₁₇ représente un atome d'hydrogène, un groupe méthyle ou phényle, et R₁₈ représente -OH, un atome d'halogène, -COOCH₃ ou -COOC₂H₅,
si m=2, représente un groupe de formule -(CH₂)ₚ- ou, à condition que T, s'il est lié à un atome d'azote, ne soit pas une liaison directe, un groupe de formule -O-(CH₂)ₚ-O-, -NR₁₅-(CH₂)ₚ-NR₁₅-, OCO-F-COO-, -NR₁₅-CO-F-CO-NR₁₅-, -OCO-NH-F-NH-COO- ou -NR₁₅-CONH-F-NHCO-NR₁₅-, dans lesquelles F représente -(CH₂)ₚ, 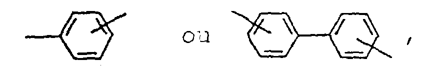
et p représente un nombre compris entre 2 et 10,
si m=3, représente un groupe 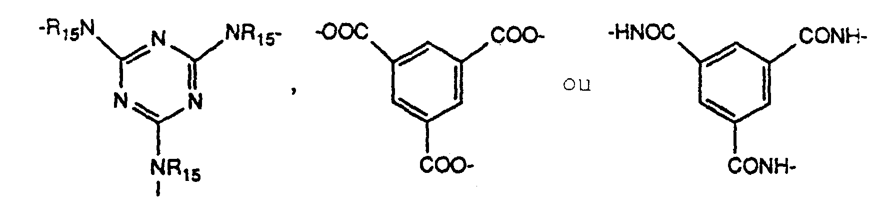 et
si m=4, représente un groupe 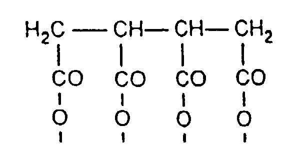 et
si m=6, représente un groupe 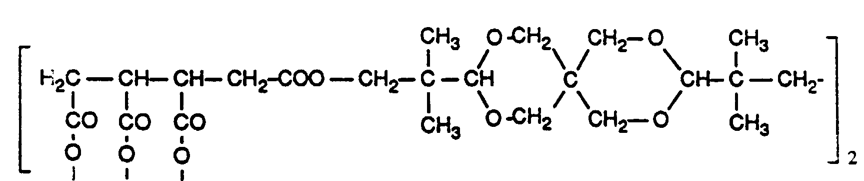
n vaut 1 ou 2,
V, si n=1, représente un groupe alkylène en C₂ à C₈, hydroxyalkylène ou acyloxyalkylène en C₄ à C₂₂, et, si n=2, représente le groupe (-CH₂)₂C(CH₂-)₂ ou le groupe 〉C〈 et
Z représente un groupe de la formule 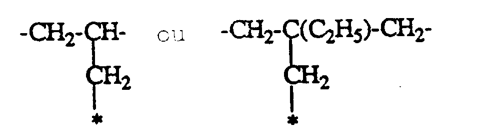 dans lesquelles la liaison indiquée par * représente une liaison conduisant à W, et W, si n=1, représente un groupe -OCOR₁₉, dans lequel R₁₉ représente un groupe alkyle en C₁ à C₁₈, ou phényle ou naphthyle qui est non substitué ou substitué par un groupe alkyle en C₁ à C₄, alkoxy en C₁ à C₄ ou un atome d'halogène, et si n=2, représente un groupe de formule -OCO-(CH₂)ₚ-COO- ou

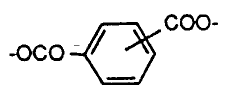

9. Composition de pigment selon la revendication 8, dans laquelle une N-hydrocarbyloxyamine des formules VII, VIII ou IX est utilisée comme défini dans la revendication 8.

10. Composition de pigment selon la revendication 8, dans laquelle une N-hydrocarbyloxyamine de formule 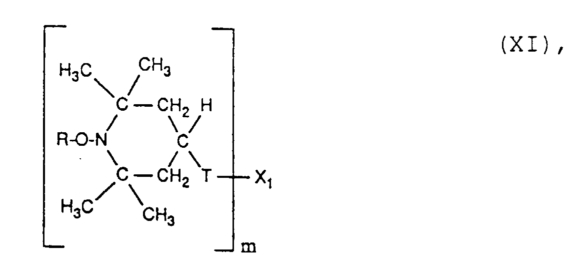 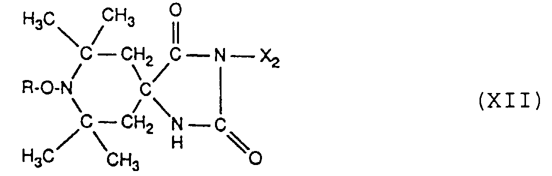 ou 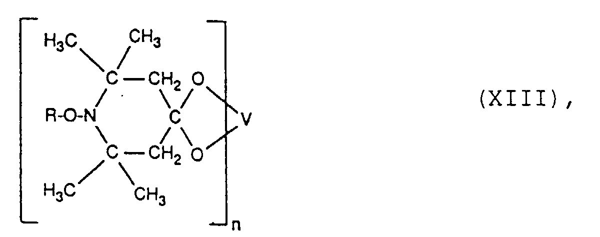 est utilisée, dans lesquelles
R est défini tel que dans la revendication 8
T représente une liaison directe,
m vaut 1, 2 ou 3,
X1, si m=1, représente le groupe alkyle en C₁ à C₁₈, -OCO-R₁₆, -NR₁₅-COR₁₆ ou 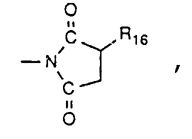 dans laquelle R₁₅ représente un atome d'hydrogène ou un groupe alkyle en C₁ à C₁₈, ou phényle ou naphtyle qui est non substitué ou substitué par un groupe alkyle en C₁ à C₄, alkoxy en C₁ à C₄, phényle ou halogéno, si m=2, représente un groupe -OCO-(CH₂)ₚ-OCO- ou -NR₁₅CO-(CH₂)ₚ-CONR₁₅- où p représente un nombre compris entre 2 et 8, 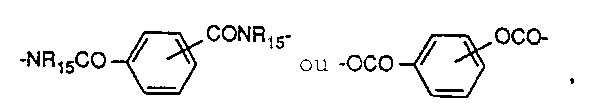 et
si m=3, représente un groupe 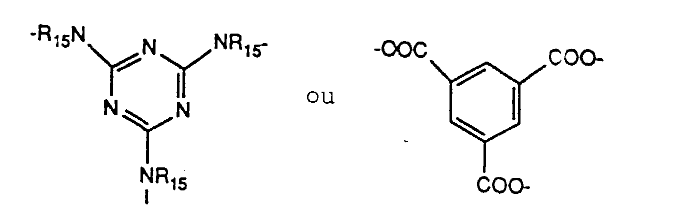
X₂ représente un groupe alkyle en C₁ à C₁₈,
n vaut 2, et
V représente le groupe (-CH₂)₂C(CH₂-)₂ ou un groupe 〉C〈

11. Composition de pigment selon la revendication 10, dans laquelle une N-hydrocarbyloxyamine de formules XI ou XII est utilisée dans lesquelles R représente un groupe tert-butyle, n-heptyle, n-octyle ou cyclohexyle, T représente une liaison directe, X₁, si m vaut 1, représente un groupe benzoyloxy ou naphtyloxy, si m vaut 2, représente un groupe -OCO-(CH₂)p-OCO- dans lequel p est un nombre compris entre 2 et 8, et X₂ représente un groupe alkyle en C₈ à C₁₈.

12. Procédé pour la stabilisation à la lumière des pigments pyrrolo[3,4-c]pyrrole de formule 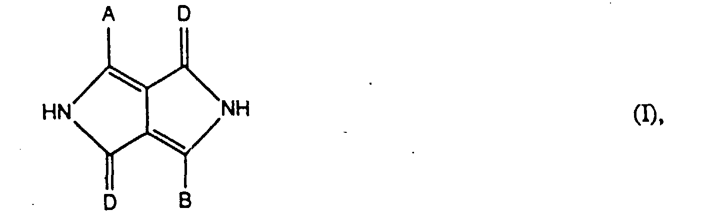 dans laquelle A et B, indépendamment l'un de l'autre, représentent des radicaux aromatiques isocycliques ou hétérocycliques, et D représente un atome d'oxygène ou de soufre,
comprenant le mélange ou le revêtement des particules de pigment avec une N-hydrocarbyloxyamine à raison de 1 à 100% en poids, basé sur le pigment.

13. Matière organique à masse moléculaire élevée comprenant une composition de pigment selon la revendication 1.

14. Matière organique à masse moléculaire élevée selon la revendication 13, sous la forme d'une peinture.

15. Matière organique à masse moléculaire élevée selon la revendication 14, sous la forme d'une peinture pour automobile.
